# EUROPEAN PATENT SPECIFICATION

(11) **EP 3 890 146 B1**
(45) Date of publication and mention of the grant of the patent: **11.03.2026**
(21) Application number: 19900431.8
(22) Date of filing: 30.10.2019
(51) Int. Cl.: H01M 10/04, H02J 1/08, H02J 7/00, H01M 50/50, H01M 50/247, H01M 50/269, H01M 50/509, H01M 50/519

(54) **ELECTRIC ENERGY STORAGE DEVICE AND ELECTRIC TOOL SYSTEM**
ELEKTRISCHE ENERGIESPEICHERVORRICHTUNG UND ELEKTRISCHES WERKZEUGSYSTEM
DISPOSITIF DE STOCKAGE D'ÉNERGIE ÉLECTRIQUE ET SYSTÈME D'OUTIL ÉLECTRIQUE

(30) Priority: 20.12.2018 CN 201811564279; 20.12.2018 CN 201811564074; 20.12.2018 CN 201811566089; 20.12.2018 CN 201811564236; 20.12.2018 CN 201822146585 U; 20.12.2018 CN 201822146597 U; 20.12.2018 CN 201822145919 U; 20.12.2018 CN 201822146566 U; 20.12.2018 CN 201822145933 U
(43) Date of publication of application: 06.10.2021
(73) Proprietor: Globe (Jiangsu) Co., Ltd., Zhonglou District Changzhou, Jiangsu 213023 (CN)
(72) Inventor: LIU, Chuanjun, Changzhou, Jiangsu 213023 (CN); YAN, An, Changzhou, Jiangsu 213023 (CN)
(74) Representative: Bergenstråhle & Partners AB
(86) International application number: PCT/CN2019/114237
(87) International publication number: WO 2020/125211

(56) References cited:
- WO-A1-2018/079722
- WO-A1-2018/098628
- CN-A- 102 570 777
- CN-A- 109 360 929
- CN-A- 109 360 930
- CN-A- 109 473 616
- CN-A- 109 599 526
- CN-U- 204 190 691
- CN-U- 209 200 050
- CN-U- 209 200 051
- CN-U- 209 200 052
- CN-U- 209 217 095
- CN-U- 209 217 096
- CN-U- 209 217 097
- CN-U- 209 217 098
- CN-U- 209 217 099
- CN-U- 209 282 869
- JP-A- 2002 291 165
- JP-A- 2002 291 165

## Description

### Field of the disclosure

The disclosure relates to the field of electric tools, in particular to an electric energy storage device and an electric tool using the electric energy storage device.

### Description of the prior art

In the garden machinery and power tool industry, power tools are generally has a rated working voltage, which means the whole machine with different voltage platforms needs battery packs of different voltage platforms to provide power, so that different battery packs need to be prepared to adapt to the electric tool with different rated working voltages, the cost is increased, and the resource is wasteful.

WO2018079722 discloses a battery pack that houses first and second cell units that are composed of a plurality of cells, and has a positive electrode power source terminal and a negative electrode power source terminal. This battery pack is provided with a series connector capable of connecting, in series, the first and second cell units and a parallel connector capable of connecting, in parallel, the first and second cell units, and is capable of switching between a parallel connection voltage and a series connection voltage.

WO2018098628 discloses a battery pack configured to be detachably installed in an electrical device. The battery pack contains a housing; N sets of electrically connected battery cells housed within the housing; N pairs of switching terminals; and a voltage control module. Two switching terminals in each one of the N pairs electrically connect to a positive output and a negative output respectively of one of the N sets of electrically connected battery cells. The battery pack is able to perform an internal switch-over of series and parallel connections between the sets of battery cells.

Therefore, it is necessary to design an improved electric energy storage device and an electric tool using the electric energy storage device to solve the above problems.

### Summary

The object of the present disclosure to provide an electric energy storage device which can provide three output voltages, and an electric tool system using the electric energy storage device.

To achieve the above object, the disclosure provides the following solution, an electric energy storage device comprises four energy units with the same rated voltage, wherein the four energy units are equally divided into two energy modules; and the electric energy storage device is provided with a positive electrode and a negative electrode; and the electric energy storage device is provided with a socket, wherein the socket comprises two voltage output terminals respectively connected with the positive electrode and the negative electrode, and the socket is provided with an in-module control part corresponding to each energy module, the in-module control part controls two energy units in the energy module to be in a parallel connection state or a series connection state and can be switched between the parallel connection state and the series connection state, and the socket is provided with an inter-module control part, wherein the inter-module control part controls the two energy modules to be in a parallel connection state or a series connection state and can switch between the parallel connection state and the series connection state.

In an embodiment, the socket is provided with two in-module control parts, each in-module control part is provided with two parallel switches and one series switch, the two parallel switches connect two energy units in the energy module in parallel, the series switch connects two energy units in the energy module in series, and in an initial state, one kind of the parallel switches and the series switch of the in-module control part is in a conducting state, and the other kind is in an off state.

In an embodiment, the inter-module control part is provided with two parallel switches which connect the two energy modules in parallel and one series switch which connects the two energy modules in series, and in an initial state, one kind of the parallel switches and the series switch of the inter-module control part is in a conducting state, and the other kind is in an off state.

In an embodiment, the series switch or the parallel switch in the in-module control part each are individually arranged in one row; the series switch of the in-module control part are arranged in one row, and the two parallel switches are arranged in the other row; or the two parallel switches and the series switch of the in-module control part are arranged in one row.

In an embodiment, four parallel switches of two in-module control parts are arranged in one row; or four parallel switches and two series switches of two in-module control parts are arranged in the same row.

In an embodiment, the series switch or the parallel switches in the inter-module control part each are individually arranged into a row; the series switch in the inter-module control part is arranged in one row, and the two parallel switches are arranged in the other row; or the two parallel switches and the series switch of the inter-module control part are arranged in one row.

In an embodiment, the six parallel switches and the three series switches of the in-module control parts and the inter-module control part are transversely arranged into two to three rows.

In an embodiment, each parallel switch and the series switch are provided with two parts separated left and right, each part is provided with one contact arm, wherein the two contact arms of the parallel switch or the series switch in a conducting state are in contact with each other, and the two contact arms of the parallel switch or the series switch in a breaking state are separated from each other.

To achieve the above object, the disclosure also provides the following technical solution. An electric tool system includes an electric tool and the electric energy storage device, wherein the electric tool is provided with a plug which is coupled with the socket, and the plug is provided with two connection pieces which are respectively and electrically connected with two voltage terminals.

In an embodiment, an internal switching part matched with the in-module control part is arranged on the plug, one of the parallel switch and the series switch of the in-module control part is a normally closed switch, the other is a normally open switch, and the internal switching part comprises an insulating part for opening the normally closed switch and a conducting part for conducting the normally open switch, so as to change the two energy units in the energy module from parallel connection to series connection or from series connection to parallel connection.

In an embodiment, an external switching part matched with the inter-module control part is arranged on the plug, one of the parallel switch and the series switch of the inter-module control part is a normally closed switch, the other is a normally open switch, and the external switching part comprises an insulating part for opening the normally closed switch and a conducting part for conducting the normally open switch , so as to change the two energy modules from parallel connection to series connection or from series connection to parallel connection.

In an embodiment, a plurality of conductive parts are arranged in an integrated structure and are respectively contacted with a plurality of normally open switches located in the same row, and insulating separation parts are arranged between adjacent conductive parts; or the conductive part and the insulating part are arranged into an integrated structure and are respectively contacted with the normally-open switch and the normally-closed switch located in the same row.

To achieve the above object, the disclosure also provides the following technical solution. An electric tool system includes a low-voltage electric tool, a medium-voltage electric tool, a high-voltage electric tool, and the electric energy storage device, wherein the low-voltage electric tool is provided with a low-voltage plug, the low-voltage plug is coupled with the socket and enables four energy units to be in a full parallel connection state; the high-voltage electric tool is provided with a high-voltage plug which is coupled with the socket and enables the four energy units to be in a full series connection state; the medium-voltage electric tool is provided with a medium-voltage plug which is coupled with the medium-voltage socket and enables the four energy units to be in a medium-voltage state that every two energy units are connected in parallel and then connected in series or every two energy units are connected in parallel and then connected in series.

In an embodiment, the electric tool system further includes a low-voltage battery pack matched with the low-voltage electric tool, a medium-voltage battery pack matched with the medium-voltage electric tool or a high-voltage battery pack matched with the high-voltage electric tool.

The beneficial effects of the disclosure are: the electrical energy storage device has a variety of output voltages, which increases the application range of the electrical energy storage device and reduces the cost.

### BRIEF DESCRIPTION OF THE DRAWINGS

FIG. 1 is a schematic view showing the connection of four energy units of the electric energy storage device according to the first embodiment.
FIG. 2 is a schematic diagram showing an initial circuit connection of four energy units of the electric energy storage device according to the first embodiment.
FIG. 3 is a terminal arrangement diagram of the electric energy storage device according to the first embodiment.
FIG. 4 is a schematic view showing the connection between the electric energy storage device and the low-voltage plug according to the first embodiment.
FIG. 5 is a schematic view showing the structure of a low-voltage plug coupled to the electric energy storage device of the first embodiment.
FIG. 6 is a schematic view of the electric energy storage device engaged with the low-voltage plug according to the first embodiment.
FIG. 7 is a schematic circuit diagram of the electrical energy storage device when mated with a low voltage plug according to the first embodiment.
FIG. 8 is a schematic view showing a structure in which the insulating part and the conductive part of the low-voltage plug are all integrally provided.
FIG. 9 is a schematic view showing a structure in which an insulating part of a low-voltage plug is integrally provided and a conductive part is additionally integrally provided.
FIG. 10 is a schematic view showing the connection between the electric energy storage device and the medium-voltage plug according to the first embodiment.
FIG. 11 is a schematic view showing the structure of a medium-voltage plug matched with the electric energy storage device to the first embodiment.
FIG. 12 is a schematic view of the electric energy storage device engaged with a medium-voltage plug according to the first embodiment.
FIG. 13 is a schematic circuit diagram of the electric energy storage device mated with a medium-voltage plug according to the first embodiment.
FIG. 14 is a schematic view showing a structure in which an insulating part and a conductive part of an in-module control part of a medium-voltage plug are integrally provided.
FIG. 15 is a schematic view showing a structure in which a conductive part of an in-module control part of a medium-voltage plug is integrally provided.
FIG.16 is a schematic view showing the structure of the electric energy storage device matched with the high-voltage plug according to the first embodiment.
FIG. 17 is a schematic view showing the connection of four energy units of the electric energy storage device according to the second embodiment.
FIG. 18 is an initial circuit connection schematic diagram of four energy units of the electric energy storage device according to the second embodiment.
FIG. 19 is a terminal arrangement diagram of the electric energy storage device according to the second embodiment.
FIG. 20 is a schematic view showing the structure of the electric energy storage device mated with the low-voltage plug according to the second embodiment.
FIG. 21 is a schematic view showing the connection between the electric energy storage device and the medium-voltage plug according to the second embodiment.
FIG. 22 is a schematic view showing the structure of a medium-voltage plug mated with the electric energy storage device according to the second embodiment.
FIG. 23 is a schematic view of the electric energy storage device mated with a medium-voltage plug according to the second embodiment.
FIG. 24 is a schematic circuit diagram of the electric energy storage device mated with a medium-voltage plug according to the second embodiment.
FIG. 25 is a schematic view showing the connection between the electric energy storage device and the high-voltage plug according to the second embodiment.
FIG. 26 is a schematic view showing the structure of a high-voltage plug coupled to the electric energy storage device according to the second embodiment.
FIG. 27 is a schematic view of the electric energy storage device engaged with the high-voltage plug according to the second embodiment.
FIG. 28 is a schematic circuit diagram of the electric energy storage device matched with the high-voltage plug according to the second embodiment.
FIG. 29 is a schematic view showing a structure in which an insulating part and a conductive part are integrally provided.
FIG. 30 is a schematic view showing the connection of four energy units of the electric energy storage device according to the third embodiment.
FIG. 31 is an initial circuit connection schematic diagram of four energy units of the electric energy storage device according to the third embodiment.
FIG. 32 is a terminal arrangement diagram of the electric energy storage device according to the third embodiment.
FIG. 33 is a schematic view showing the connection between the electric energy storage device and the low-voltage plug according to the third embodiment.
FIG. 34 is a schematic view showing the structure of a low-voltage plug coupled to the electric energy storage device according to the third embodiment.
FIG. 35 is a schematic cross-sectional view of the electric energy storage device engaged with the low-voltage plug according to the third embodiment.
FIG. 36 is a schematic circuit diagram of the electric energy storage device matched with the low-voltage plug according to the third embodiment.
FIG. 37 is a schematic view showing a structure in which the insulating part and the conductive part of the low-voltage plug are integrally provided.
FIG. 38 is a schematic view showing a structure in which conductive parts of the low-voltage plug are integrally provided.
FIG. 39 is a schematic view showing the structure of the electric energy storage device mated with the medium voltage plug according to the third embodiment.
FIG. 40 is a schematic view showing the connection between the electric energy storage device and the high-voltage plug according to the third embodiment.
FIG. 41 is a schematic view showing the structure of a high-voltage plug fitted with the electric energy storage device according to the third embodiment.
FIG. 42 is a schematic view of the electric energy storage device mated with a high-voltage plug according to the third embodiment.
FIG. 43 is a schematic circuit diagram of the electric energy storage device mated with a high-voltage plug according to the third embodiment.
FIG. 44 is a schematic view showing a structure in which the insulating part and the conductive part of the high-voltage plug are integrally provided according to the third embodiment.

### DETAILED DESCRIPTION

In order to make objects, aspects, and advantages of the disclosure more apparent, the disclosure will describe in detail with the drawings and specific examples.

It should be noted that, in the drawings, wherein only structural and/or process steps have been shown and described in detail that are pertinent to the disclosure, other details that are not pertinent to the disclosure have been omitted so as not to obscure the disclosure with unnecessary detail.

Additionally, it should also be noted that the terms " comprises, comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

The disclosure provides an electric energy storage device which comprises four energy units with equal voltages, wherein the four energy units can provide three output voltages through series-parallel combination. The energy unit refers to an object capable of providing electric energy, such as a battery cell, a lithium battery or other energy carrier, of course a plurality of batteries can be electrically combined to form one energy unit; such batteries include, but are not limited to, rechargeable batteries such as lithium batteries, nickel-hydrogen batteries, cadmium-nickel batteries. The rated voltages of the four energy units are both nV. It should be noted that a measured voltage of n ±5% V per energy unit can be considered equal.

In this disclosure, four energy units are equally divided into two energy modules, the circuit connection between two energy units in each energy module has two selectable states of parallel connection and series connection, and the circuit connection between two energy modules also has two selectable states of parallel connection and series connection. Thus, the four energy units of the electric energy storage device have the following four connection states:
two energy units in the energy modules are connected in parallel, the two energy modules are connected in parallel, so that all four energy units are connected in parallel; this state can be simply referred to as a full parallel state, and the output voltage is nV;
two energy units in the energy modules are connected in series, the two energy modules are connected in series, so that all four energy units are connected in series; this state can be simply referred to as a full series state, and the output voltage is 4 * nV;
two energy units in the energy modules are connected in series, the two energy modules are connected in parallel, this state can be simply referred to as an internal series- external parallel state, and the output voltage is 2 * nV; and
two energy units in the energy modules are connected in parallel, the two energy modules are connected in series, this state can be simply referred to as an internal parallel external series state, and the output voltage is 2 * nV.

The third and fourth output voltages are the same, so the electric energy storage device can output three rated voltages. In addition to the initial connection state, other connection states can be switched by the mating corresponding plug. In addition, all of the energy units are engaged in operation in any of the aforementioned connected states.

The specific embodiments of the disclosure will be described below with reference to the drawings.

### First embodiment

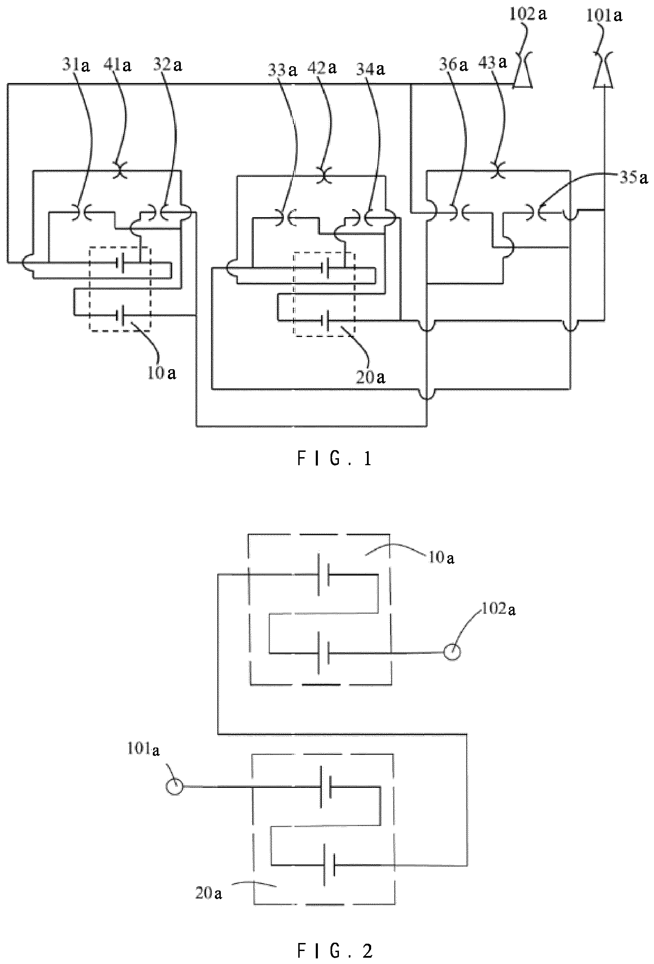

As shown in FIG. 1 and FIG. 2,the four energy units of the electric energy storage device are divided into an energy module 10a and an energy module 20a, each energy module 10a and 20a including two energy units. The electric energy storage device is provided with a socket and the socket has two voltage output terminals correspondingly connected to a total positive electrode and a total negative electrode of the two energy modules 10a and 20a connected in parallel or in series , respectively a positive terminal 101a and a negative terminal 102a.

The socket (not shown) of the electric energy storage device comprises two in-module control parts and one inter-module control part, wherein the two in-module control parts are used for respectively controlling the connection state of two energy units in each energy module 10a and 20a, and the inter-module control part is used for controlling the connection state between the energy modules 10a and 20a.

The in-module control part corresponding to the energy module 10a includes a first series switch 41a, a first parallel switch 31a, and a second parallel switch 32a. The in-module control part corresponding to the energy module 20a includes a second series switch 42a, a third parallel switch 33a, and a fourth parallel switch 34a. Each of the in-module control parts is connected to the two energy units in the energy modules 10a and 20a in the same manner, and the following description is an example of the in-module control part corresponding to the energy module 10a.

The first series switch 41a, the first parallel switch 31a, and the second parallel switch 32a all comprise two contact parts (not numbered) connected with the electrodes of the energy units, and the two contact parts of the first parallel switch 31a and the second parallel switch 32a are respectively connected with the electrodes with the same polarity of the two energy units in the energy module 10a. As shown in FIG. 1, two contact parts of the first parallel switch 31a are respectively connected to the negative electrodes of the two energy units, and two contact parts of the second parallel switch 32a are respectively connected to the positive electrodes of the two energy units, that is the first parallel switch 31a and the second parallel switch 32a are connected in parallel to the two energy units in the energy module 10a. The two contact parts of the first series switch 41a are respectively connected with electrodes of opposite polarities of the two energy units, and the other two electrodes of opposite polarities of the two energy units are respectively connected with the afore mentioned voltage output terminals 101a, 102a, that is, the first series switch 41a is connected in series with the two energy units in the energy module 10a.

The in-module control part corresponding to the energy module 20a is provided with a second series switch 42a, a third parallel switch 33a, and a fourth parallel switch 34a, wherein the second series switch 42a is connected in series with two energy units in the energy module 20a, and the third parallel switch 33a and the fourth parallel switch 34a are connected in parallel with two energy units in the energy module 20a.

The inter-module control part is connected in a manner similar to the in-module control part, and can be understood to refer to the energy module as an energy unit, the following is a detailed description of the inter-module control part. Each energy module 10a, 20a is provided as a whole with two positive and negative electrodes. The inter-module control part includes a third series switch 43a, a fifth parallel switch 35a, and a sixth parallel switch 36a, and both contact parts of the fifth parallel switch 35a and the sixth parallel switch 36a are respectively connected to electrodes of the same polarity of the two energy modules 10a, 20a. As shown in FIG. 1, two contact parts of the fifth parallel switch 35a are respectively connected with two positive electrodes of the two energy modules 10a and 20a, two contact parts of the sixth parallel switch 36a are respectively connected with two negative electrodes of the two energy modules 10a and 20a, namely, the parallel switches 35a and 36a are connected with the two energy modules 10a and 20a in parallel; the two contact parts of the third series switch 43a are respectively connected to two electrodes of opposite polarity of the two energy modules 10a, 20a, that is, the third series switch 43a is connected in series with the two energy modules 10a and 20a. The other two opposite polarity electrodes of the two energy modules 10a, 20a are respectively connected with the aforementioned voltage output terminals 101a, 102a as output structures.

One kind of the series switch and the parallel switch of the in-module control part is in on-state, and the other is in off-state. In this embodiment, the four parallel switches 31a, 32a, 33a, 34a of the in-module control part are normally open switches in the off-state, and the two series switches 41a, 42a of the in-module control part are normally closed switches in the on-state, so that the two energy units in the energy modules 10a, 20a are initially connected in series.

One kind of the series switch and the parallel switch of the in-module control part is in on-state, and the other is in off-state. In this embodiment, the parallel switches 35a, 36a of the inter-module control part are normally open switches in off-state, the series switch 33a of the inter-module control part is normally closed switches in on-state, and the energy modules 10a, 20a are initially connected in series. The energy units of the electric energy storage device are initially in series state with an output voltage of 4nV, and FIG. 2 is a corresponding circuit diagram.

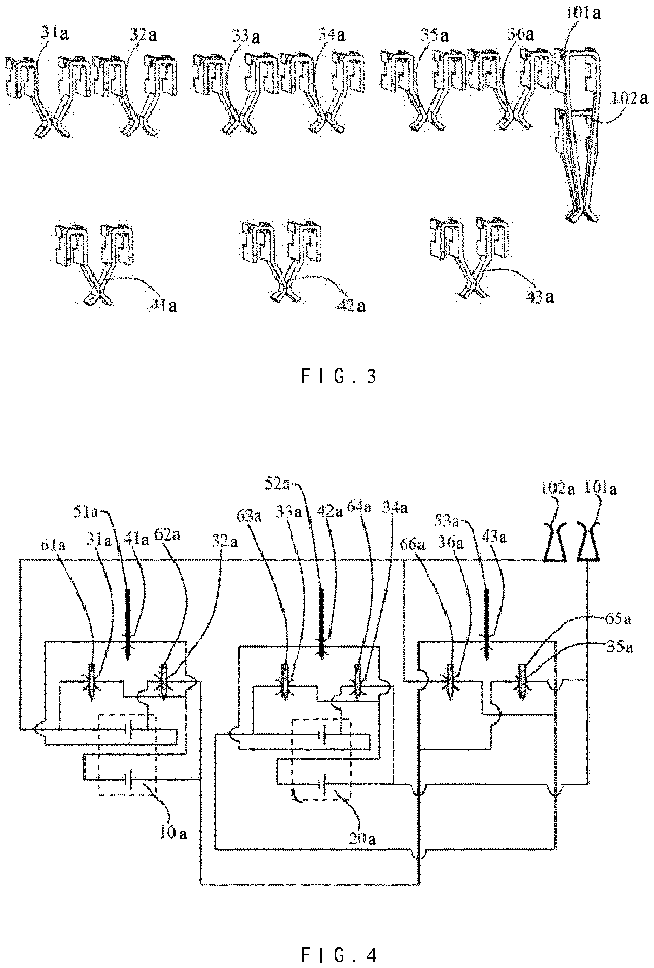

A terminal structure of a parallel switch and a series switch will be described with reference to FIG 3. The structure of the two kinds of switches is basically the same, each switch comprises two parts separated from the left and right, each part comprises a main body and a contact arm extending forward from the main body, and the two contact arms together form a contact part. In the embodiment, the series switch is a normally closed switch, namely, two contact arms of the series switch are in a contact conducting state; the parallel switch is a normally open switch, that is the two contact arms of the parallel switch are in a non-contact open state.

Referring to FIG. 3, in this embodiment, three series switches 41a, 42a, 43a and six parallel switches 31a, 32a, 33a, 34a, 35a, 36a of two in-module control parts and the inter-module control part are arranged in front and rear two pars, and three series switches 41a, 42a, 43a are arranged in front and six parallel switches 31a, 32a. 33a, 34a, 35a, 36a are located in the rear row and are arranged transversely in sequence, and in the left-right direction, each series switch 41a, 42a, 43a and each series switch 31a, 32a, 33a, 34a, 35a, 36a are independently arranged in one row, wherein each series switch 41a, 42a, 43a are respectively located between two corresponding parallel switches 31a, 32a, 33a, 34a, 35a, 36a. The two voltage output terminals of the electric energy storage device are arranged up and down in a row, and are respectively a positive terminal 101a arranged on the upper side and a negative terminal 102a arranged on the lower side. As a simple variation, the two voltage output terminals 101a, 102a can arrange back and forth or left and right.

Referring to FIGs. 4 to 9 in conjunction with FIG. 1, a low-voltage electric tool (not shown) operates at nV and has a low-voltage plug (not shown) that mates with a plug of the electrical energy storage device. The low-voltage plug is provided with two connection pieces 71a and 72a in a monolithic structure, and the two connection pieces 71a and 72a are respectively connected with the two voltage output terminals 101a and 102a.

The low-voltage plug is also provided with two internal switching parts respectively corresponding to each of the in-module control parts, the internal switching parts is used for switching controlling of the in-module control parts so as to change the connection states of the two energy units in the energy modules 10a and 20a. And the low-voltage plug is also provided with an external switching part corresponding to the inter-module control part, the external switching part is used for switching controlling of the inter-module control part so as to change the connection state between the energy modules 10a and 20a. Each switching part is provided with an insulating part corresponding to the normally-closed switch and used for opening the two contact arms, and a conducting part corresponding to the normally-open switch and used for conducting the two contact arms so as to realize the function of switching states.

In this embodiment, the two parallel switches of the in-module control parts are normally open switches, the series switches are normally closed switches, and the internal switching part of the control part in the module corresponding to the energy module 10a is provided with a first insulating part 51a, a first conductive part 61a and a second conductive part 62a; the internal switching part of the in-module control part corresponding to the energy module 20a includes a second insulating part 52a, a third conductive part 63a, and a fourth conductive part 64a. In addition, the two parallel switches of the inter-module control part are normally open switches and the series switches are normally closed switches, so the external switching part is correspondingly provided with a third insulating section 53a, a conductive section 65a and a conductive section 66a. Each insulating part and each conductive part are arranged corresponding to the arrangement of the corresponding parallel switch and the corresponding series switch.

When the low-voltage plug is matched with the electric energy storage device, the two internal switching parts are respectively matched with the two in-module control parts, the first insulating part 51a is inserted between the two contact parts of the first series switch 41a, and the second insulating part 52a is inserted between the two contact parts of the second series switch 42a, so that the first series switch 41 and the second series switch 42 are disconnected; the first conductive part 61a is interposed between two contact parts of the first parallel switch 31a, the second conductive part 62a is interposed between two contact parts of the second parallel switch 32a, the third conductive part 63a is interposed between two contact parts of the third parallel switch 33a, and the fourth conductive part 64a is interposed between two contact parts of the fourth parallel switch 34a. The first parallel switch 31a, the second parallel switch 32a, the third parallel switch 33a, and the fourth parallel switch 34a are respectively conducted, that is, the two internal switching parts respectively change the two energy units in the two energy modules 10a and 20a from series connection to parallel connection.

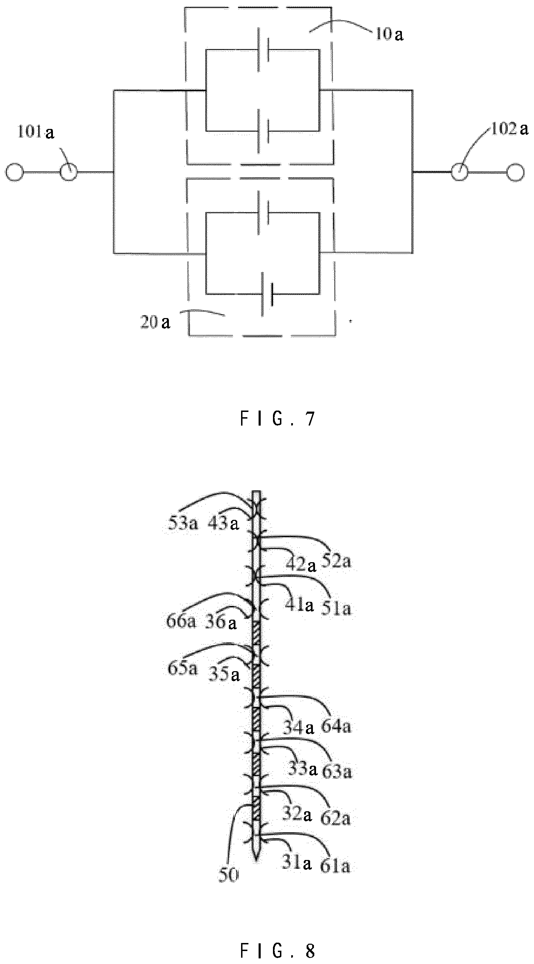

The external switching part is fitted with the inter-module control part, the third insulating part 53a is inserted between the two contact parts of the third series switch 43a to turn off the third series switch 43a, and the fifth conductive part 65a is inserted between the two contact parts of the fifth parallel switch 35a. The sixth conductive part 66a is interposed between the two contact parts of the sixth parallel switch 36a to make the fifth parallel switch 35a and the sixth parallel switch 36a conductive, that is the external switching part changes the two energy modules 10a, 20a from series connection to parallel connection, so that the four energy units are all connected in parallel to output a low voltage nV to the low voltage power tool, of which the circuit diagram is shown in FIG. 7.

It should be noted that the arrangement of the parallel switches and the series switches in this embodiment may be arranged as desired and should not be so limited. For example, four parallel switches 31a, 32a, 33a, 34a of the two in-module control parts may be arranged in one row, two series switches 41a, 42a of the two in-module control parts may be arranged in one row, two parallel switches 35a, 36a of the inter-module control parts may be arranged in one row, and a series switch 43a of the inter-module control parts may be arranged in one row; or the parallel switches 31a, 32a, 33a, 34a of the two in-module control parts are arranged in one row, the two series switches 41a, 42a of the two in-module control parts are arranged in one row, and the two parallel switches 35a, 36a and the series switch 43a of the inter-module control parts are arranged in one row; or four parallel switches 31a, 32a, 33a, 34a and two series switches 41a, 42a of the two in-module control parts are arranged in one row, and two parallel switches 35a, 36a and the series switch 43a of the inter-module control parts are arranged in one row; alternatively, the four parallel switches 31a, 32a, 33a, 34a and the series switches 41a, 42a of the two in-module control parts are arranged in one row, the two parallel switches 35a, 36a of the inter-module control parts are arranged in one row, and the series switch 43a of the inter-module control parts is arranged in one row. In summary, the arrangement of parallel switches and series switches on an electric energy storage device varies widely, and those skilled in the art will appreciate that variations in the arrangement are within the scope of this disclosure.

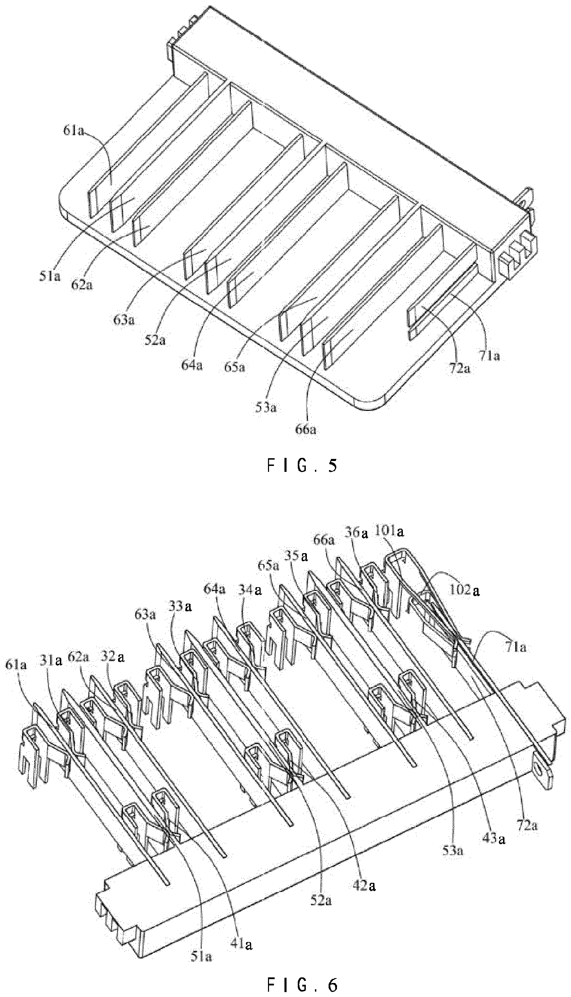

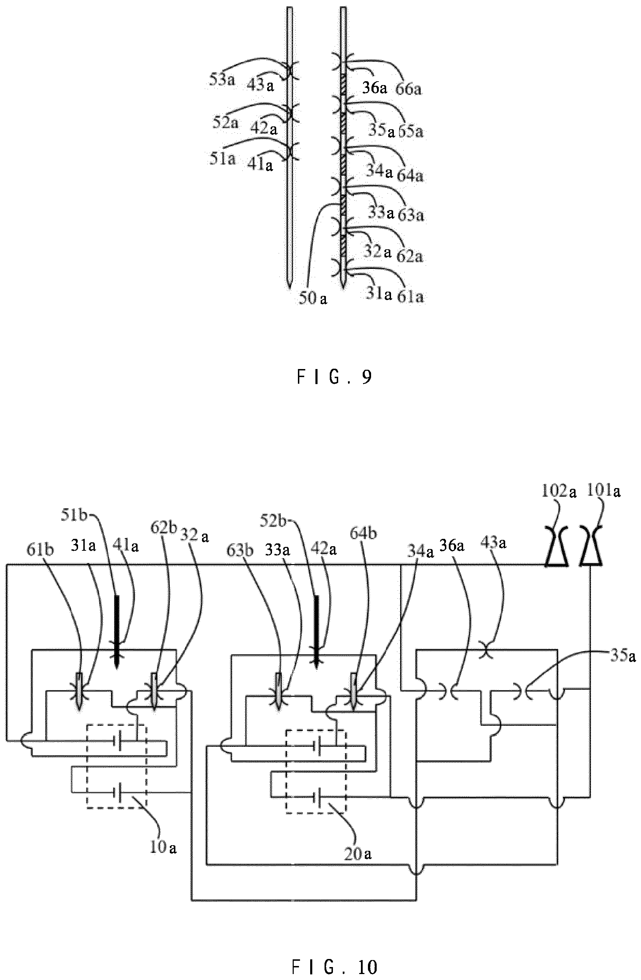

The first, the second, the third, the fourth, the fifth, and the sixth are not limitative to the number and are merely illustrative of the corresponding relationships, and in fact, the arrangement of the conductive part and the insulating part may be correspondingly arranged according to the terminal arrangement of the electric energy storage device, for example, in FIG. 6, the first to sixth conductive parts 61a, 62a, 63a, 64a, 65a, 66a each set independently; each conductive part and each insulating part can also be integrally arranged as an inserting blade 50a, as shown in FIG.8; or all the conductive parts 61a, 62a, 63a, 64a, 65a, and 66a can be integrally arranged as another inserting blade 50a, a separating part 50 made of insulating materials is arranged between adjacent conductive parts, and the three insulating parts can be integrally arranged as shown in FIG.9; or the three insulating parts are integrally arranged; alternatively, parts of the conductive parts may be integrally provided, the remaining parts may be integrally or separately provided, and a separating part made of an insulating materials may be provided between the adjacently conductive parts provided. In summary, the arrangement of the insulating part and the conductive part can be correspondingly arranged according to the arrangement of the normally-open switch and the normally-closed switch on the electric energy storage device, and the arrangement modes can vary widely, and those skilled in the art will appreciate that variations in the arrangement are within the scope of this disclosure.

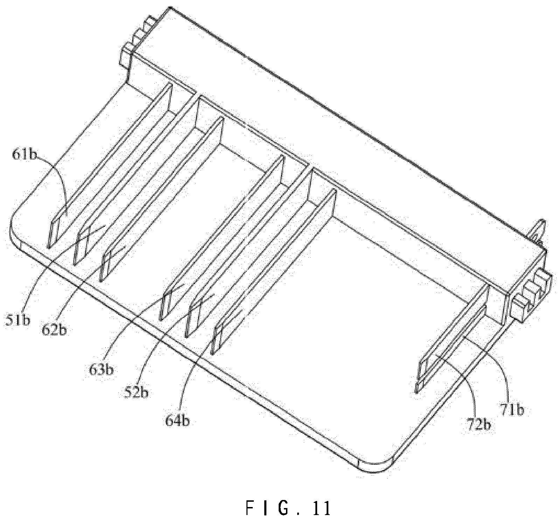

Referring to FIGs. 10 to 15, a medium-voltage electric tool (not shown) having an operating voltage of 2nV and having a medium-voltage plug (not shown) mated with a plug of the electric energy storage device is shown. The medium-voltage plug is provided with two internal switching parts matched with the in-module control part and two connecting pieces 71b and 72b matched with the two voltage output terminals 101 and 102.

The internal switching part of the medium-voltage plug is basically the same in structure as the internal switching part of the low-voltage plug, and is arranged corresponding to the in-module control part and used for switching the state of each in-module control part. The internal switching part of the module inner control part corresponding to the energy module 10a comprises a first insulating part 51b, a first conductive part 61b, and a second conductive part 62b; the internal switching part of the in-module control part corresponding to the energy module 20a includes a second insulating part 52b, a third conductive part 63b, and a fourth conductive part 64b.

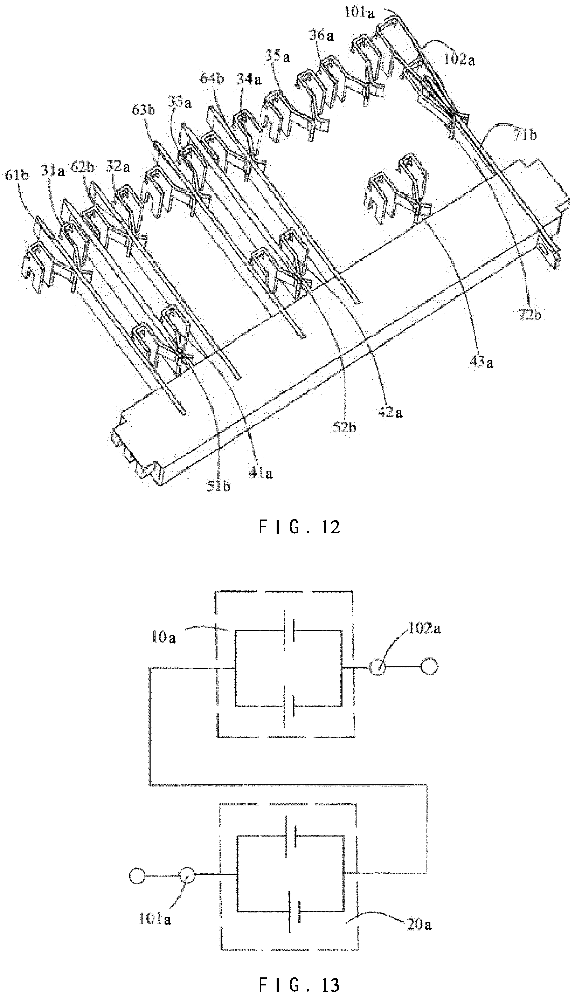

When the medium-voltage plug is matched with the electric energy storage device, the two internal switching parts are respectively matched with the in-module control parts, so that the two energy units in the two energy modules 10a and 20a are changed from series connection to parallel connection. The specific matching mode can be referred to that the internal switching part in the low-voltage plug is matched with the internal control part in the two modules, which the detailed description is omitted. In addition, the two energy modules 10a, 20a are connected in series, the circuit diagram of the four energy units is shown in FIG 13, and the medium voltage 2nV in the electric energy storage device is output to the medium voltage power tool.

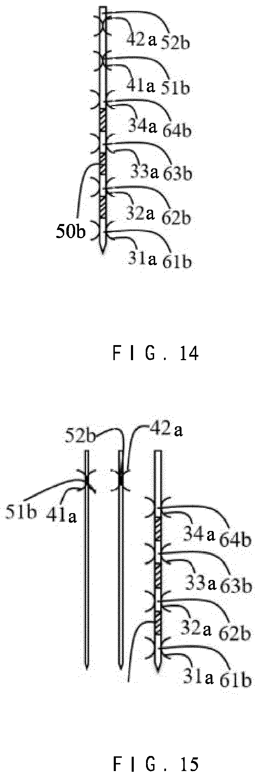

It should be noted that the aforementioned embodiment is provided with an insulating part corresponding to a normally closed switch and a conductive part corresponding to a normally open switch. It should be understood that the first, second, third, and fourth terms herein are not intended to be limiting in number, but merely illustrative of corresponding relationships. The arrangement of the four conductive parts 61b, 62b, 63b, 64b and the two insulating parts 51b, 52b of the two internal switching parts of the medium-voltage plug may be correspondingly arranged in various forms according to the terminal arrangement of the electric energy storage device, for example, the four conductive parts 61b, 62b, 63b, 64b and the two insulating parts 51b and 52b may all be integrally provided as a plug connector 50b,just as shown in FIG. 14; or the four conductive parts 61b, 62b, 63b, 64b are integrally arranged as another plug connector 50b, and a separation part 50 made of insulating materials is arranged between the adjacent conductive parts 61b, 62b, 63b, 64b, as shown in FIG.15; or the four conductive parts 61b, 62b, 63b, 64b are respectively arranged as shown in FIG. 12; or two insulating parts 51b, 52b may be separately provided, as shown in FIG. 12; of course, the two insulating parts 51b, 52b may be integrally provided. In summary, the arrangement of the insulating part and the conductive part of the internal switching part can be correspondingly arranged according to the arrangement of the normally-open switch and the normally-closed switch on the electric energy storage device, and the arrangement modes can vary widely, and those skilled in the art will appreciate that variations in the arrangement are within the scope of this disclosure.

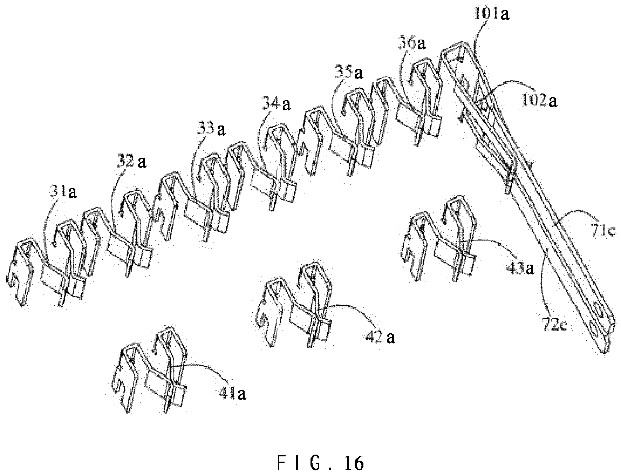

Referring to FIG. 16 in conjunction with FIG. 2, a high-voltage electric tool (not shown) operates at a voltage of 4nV and has a high- voltage plug (not shown) that mates with a plug of the electrical energy storage device. The high-voltage plug is provided with two connection pieces 71c, 72c respectively matched with the two voltage output terminals 101,102.

In the initial state, two energy units in the energy modules 10a and 20a of the electric energy storage device are connected in series through the in-module control part, the two energy modules 10 and 20 are connected in series through the inter-module control part, and the circuit connection of the four energy units is shown in FIG. 2, and the voltage of the four energy units is 4nV. Therefore, it is only necessary to connect the two connection pieces 71c, 72c on the high-voltage plug with the two voltage output terminals 101, 102, respectively, to output a high voltage of 4nV to the high-voltage power tool.

### Second embodiment

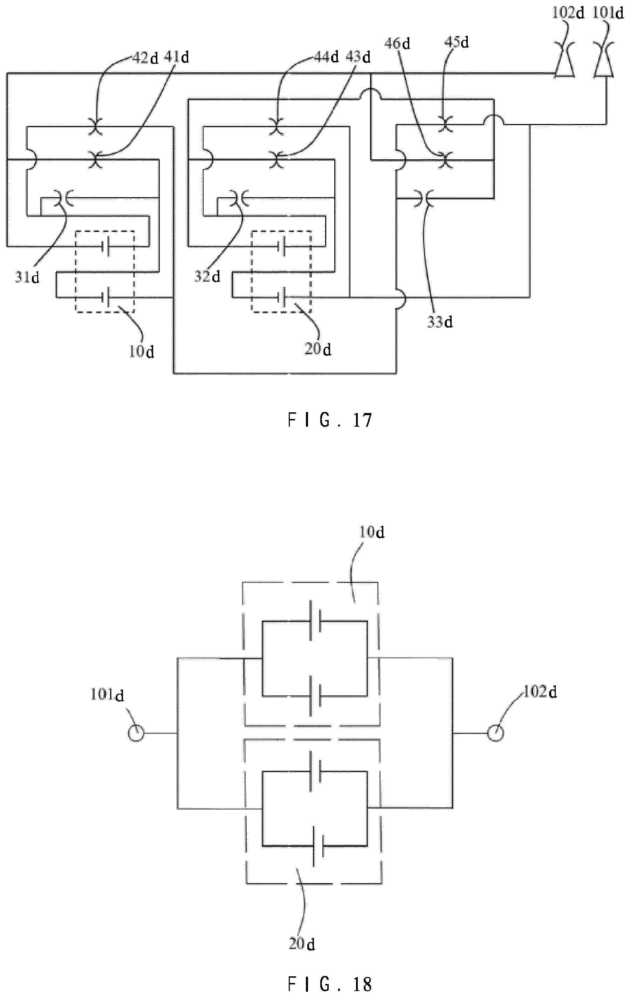

Referring to FIGs.17 to 18, the electric energy storage device provides the second embodiment, wherein the electric energy storage device also comprises four energy units with equal voltages, and the voltage of each energy unit is nV; the four energy units are equally divided into two energy modules 10d, 20d, each energy module 10d, 20d comprising two energy units, and the electrical energy storage device is also capable of providing three output voltages. The electric energy storage device is provided with a socket having two voltage output terminals correspondingly connected to a total positive electrode and a total negative electrode after being connected in parallel or in series with two energy modules 10d and 20d, respectively a positive terminal 101d and a negative terminal 102d.

The socket comprises two in-module control parts and an inter-module control part, wherein the in-module control parts are used for controlling the connection state of two energy units in each energy module 10d and 20d, and the inter-module control part is used for controlling the connection state between the energy modules 10d and 20d. The in-module control part corresponding to the energy module 10d comprises two parallel switches 41d, 42d, and a series switch 31d; the inner module control part of the corresponding energy module 20d comprises two parallel switches 43d, 44d, and a series switch 32d; the inter-module control part includes two parallel switches 45d, 46d, and a series switch 33d. The specific connection mode of each switch is the same as that of each switch in the first embodiment, which can refer to the first embodiment.

Different from the first embodiment, in the second embodiment, the parallel switches 41d, 42d, 43d, 44d, 45d, 46d are normally closed switches, and the series switches 31d, 32d, 33d are normally open switches, so initially, two energy units in the energy modules 10d, 20d are connected in parallel, and the two energy modules 10d, 20d are connected in parallel. The four energy units are all connected in parallel, outputting a voltage nV through voltage terminals 101d, 102d, as shown in FIG.18.

The structure of each series switch or each parallel switch is substantially the same as that in the first embodiment, wherein each switch comprises two separately arranged contact arms, corresponding to the embodiment, the two contact arms of the parallel switch are in contact conduction, and the two contact arms of the series switch are disconnected without contact. In this embodiment, the arrangement of the respective switches is also different from that in the first embodiment.

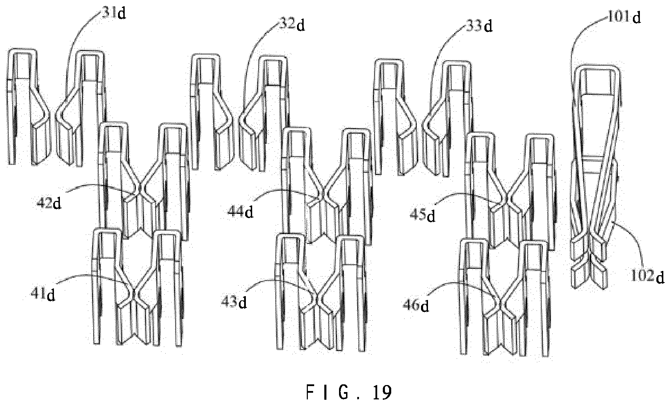

Referring to FIG. 19, three series switches 31d, 32d, 33d and six parallel switches 41d, 42d, 43d, 44d, 45d, 46d of the in-module control parts and the inter-module control part are arranged in a plurality of rows in a forward-backward direction. From left to right, two parallel switches 41d and 42d are arranged in one row, two parallel switches 43d and 44d are arranged in one row, and two parallel switches 45d and 46d are arranged in one row; the three series switches 31d, 32d, 33d are respectively arranged in a row, are arranged behind the parallel switches 41d, 42d, 43d, 44d, 45d, 46d, and are staggered with the three rows formed by the parallel switches 41d, 42d, 43d, 44d, 45d, 46d in the left-right transverse direction. The series switch 31d is located in the far left row. The voltage output terminals 101d, 102d are located in the far right row.

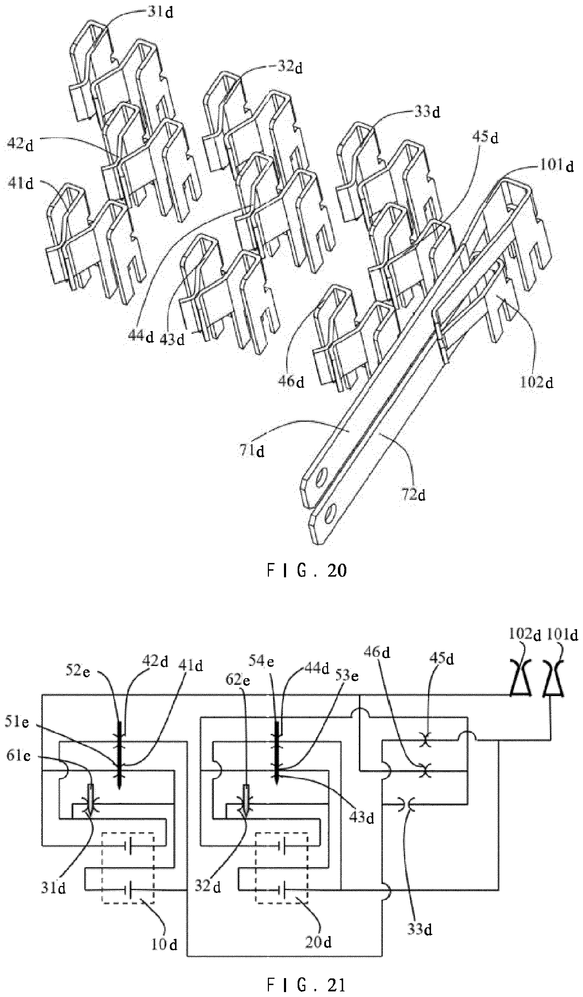

Referring to FIG. 20 in conjunction with FIG.17, a low-voltage electric tool (not shown) operates at nV and has a low-voltage plug (not shown) that mates with a plug of the electrical energy storage device. The low-voltage plug is provided with two connection pieces 71d, 72d. The connecting pieces 71d and 72d are respectively matched with the two voltage output terminals 101d and 102d, the two energy units in the energy modules 10d and 20d are kept in parallel, the two energy modules 10d and 20d are kept in parallel, and nV can be output to the low-voltage electric tool.

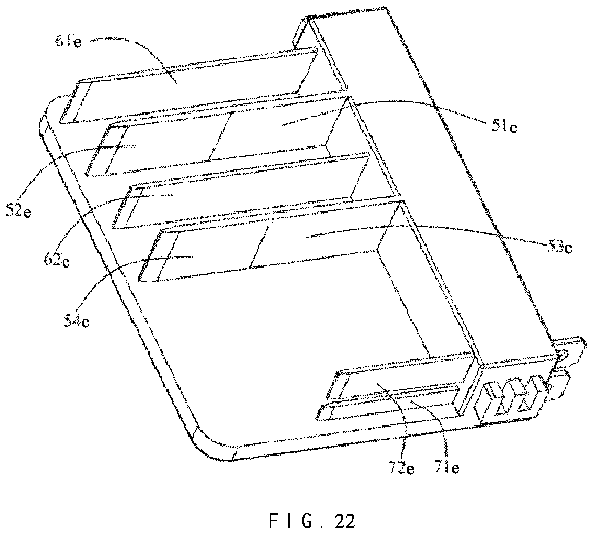

Referring to FIGS. 21 to 23, a medium voltage electric tool (not shown), which has a working voltage of 2nV and has a medium voltage plug (not shown) that is mutually matched with the plug of the electric energy storage device.

The medium voltage plug is provided with two connection pieces 71e, 72e cooperating with two output terminals 101d, 102d. The medium-voltage plug is provided with an internal switching part matched with the in- module control part and used for switching the control of the in- module control part on the connection states of the two energy units in the energy modules 10d and 20d. In this embodiment, the internal switching part comprises two insulating parts and one conducting part, and specifically, the internal switching part of the in-module control part corresponding to the energy module 10d comprises a conducting part 61e and two insulating parts 51e and 52e; the internal switching part of the in-module control part corresponding to the energy module 10d includes a conductive part 62e and two insulating parts 53e, 54e.

Each insulating part and the conductive part are arranged corresponding to the arrangement of the corresponding parallel switch and the series switch, on the basis that the two parallel switches 41d and 42d are located in one row, the two insulating parts 51e and 52e are integrally arranged in one row, on the basis that the two parallel switches 43d and 44d are located in one row, the two insulating parts 53e and 54e are integrally arranged in one row.

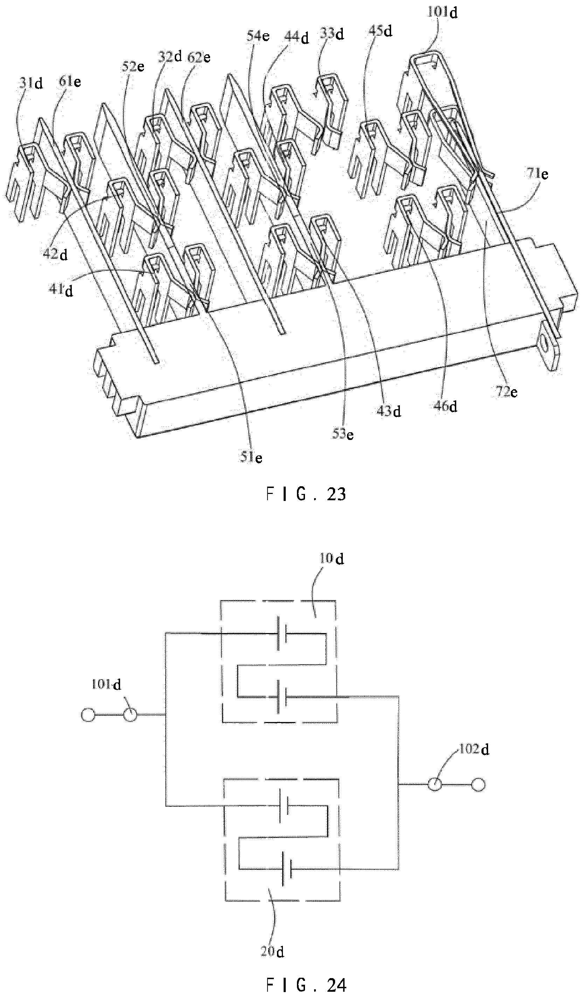

When the medium-voltage plug is mated with the socket, the insulating parts 51e, 52e, 53e, and 54e respectively disconnect the parallel switches 41d, 42d, 43d, and 44d; the conducting parts 61e and 62e respectively conduct the series switches 31d and 32d, so that two energy units in the energy modules 10d and 20d are changed from parallel connection to series connection, the two energy modules 10d and 20d are kept in parallel connection, and the four energy units are connected in parallel after being connected in series in pairs to output medium-voltage 2nV to the medium-voltage electric tool, and the corresponding connection circuit diagram is shown in FIG.24.

It should be noted that the aforementioned embodiment is provided with an insulating part corresponding to each normally-closed switch and a conductive part corresponding to each normally-open switch. It should be understood that two or four of them are not to be limited in number and are merely illustrative of corresponding relationships, and in fact, the arrangement of the conductive parts and the insulating parts may be correspondingly arranged according to the terminal arrangement of the electric energy storage device, and the conductive parts 61e, 62e may be separately arranged as shown in FIG. 23; the conductive parts 61e, 62e may be integrally provided, and insulating partitions made of an insulating material are provided between adjacent conductive parts to avoid short circuits. The insulating parts 51e, 52e, 53e, 54e may be integrally provided, or may be all separately provided, or may be partially integrally provided, or may be partially separated, for example, the insulating parts 51e, 52e may be integrally provided, the insulating parts 53e, 54e may be integrally provided, or both may be integrally provided, as shown in FIG. 23. The conductive part and the insulating part may also be integrally provided, for example, one insulating part made of an insulating material and one conductive part made of a conductive material. In summary, the arrangement of the insulating part and the conductive part can be correspondingly arranged according to the arrangement of the normally-open switch and the normally-closed switch on the electric energy storage device, and the arrangement modes are varied, and those skilled in the art will appreciate that variations in the arrangement are within the scope of this disclosure.

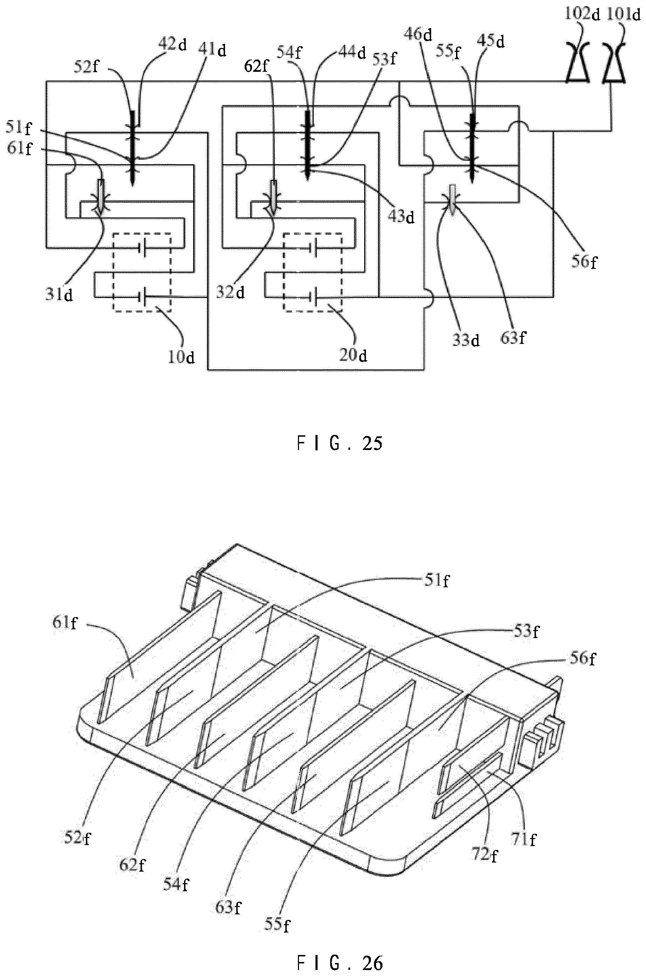

Referring to FIGS. 25 to 27, a high-voltage electric tool (not shown), which has a working voltage of 4nV and has a high-voltage plug (not shown) that is mutually matched with the plug of the electrical energy storage device.

The high-voltage plug is provided with two connection pieces 71b, 72b which respectively mate with the two output terminals 101d, 102d. The high-voltage plug is further provided with an internal switching part matched with the in-module control part and used for switching the in-module control part to control the connection states of the two energy units in the energy modules 10d and 20d. In this embodiment, the internal switching part includes two insulating parts and one conductive part, specifically, the internal switching part of the in-module control part corresponding to the energy module 10d includes a conductive part 61f and two insulating parts 51f, 52f, and the internal switching part of the in-module control part corresponding to the energy module 20d includes a conductive part 62f and two insulating parts 53f, 54f. The structure of the internal switching part is consistent with that of the medium-voltage plug and will not be described in detail.

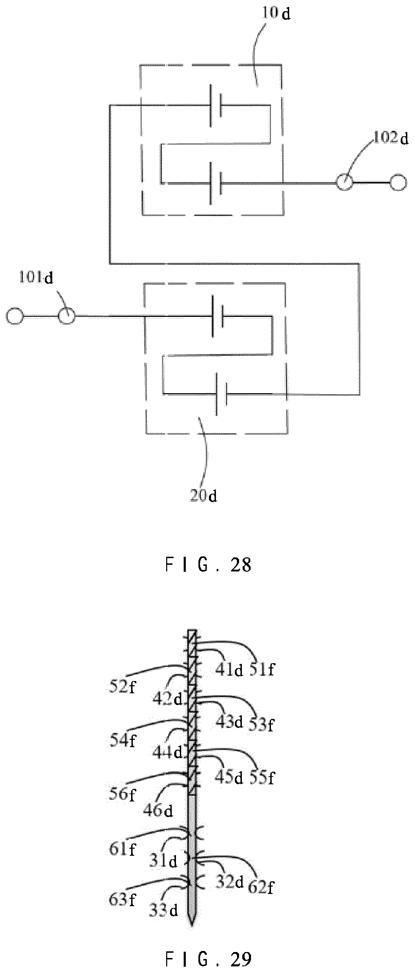

In this embodiment, the high-voltage plug is further provided with an external switching part matched with the inter-module control part and used for switching the control of the connection state between the energy modules 10d and 20d by the inter-module control part. In this embodiment, the external switching part includes a conductive part 63f and two insulating parts 55f, 56f. When the high-voltage plug is mated with the socket, the internal switching part is matched with the in-module control part, and the two energy units in the energy modules 10d and 20d are changed from being connected in parallel to being connected in series, the specific matching method can refer to the matching of the medium-voltage plug and the socket in this embodiment. The external switching part is matched with the inter-module control part, the insulating parts 55f and 56f open the parallel switches 45d and 46d, the conducting part 63f conducts and connects the series switch 33d, the two energy modules 10d and 20d are changed from parallel connection to series connection so as to output high voltage 4nV to the high-voltage electric tool, and a connection circuit diagram of the four energy units is shown in FIG.28.

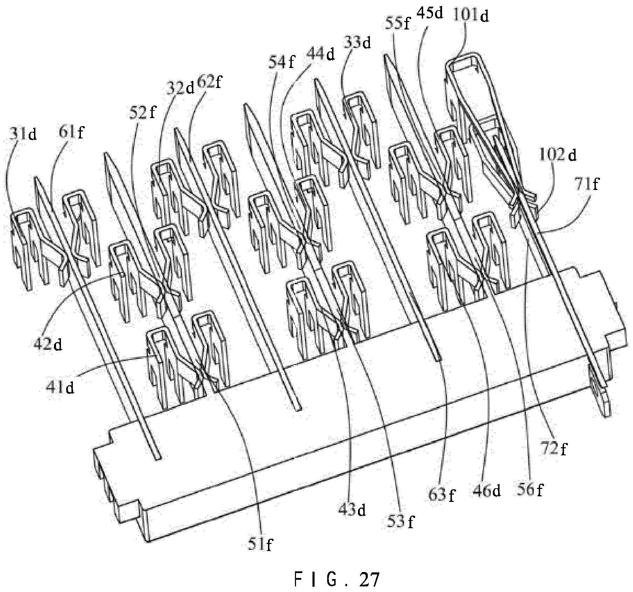

It should be noted that the arrangement of the conductive part and the insulating part can be arranged according to the terminal arrangement of the electric energy storage device. The conductive parts 61f, 62f, 63f and the insulating parts 51f, 52f, 53f, 54f, 55f, 56f can be integrated, as shown in FIG.29; the conductive part and the insulating part may be separately provided, or the insulating part may be partially or entirely integrally provided. The conductive parts may be provided separately as shown in FIG. 27, or provided integrally. In summary, the arrangement of the insulating part and the conductive part can be correspondingly arranged according to the arrangement of the normally-open switch and the normally-closed switch on the electric energy storage device, and the arrangement modes are varied, and those skilled in the art will appreciate that variations in the arrangement are within the scope of this disclosure.

### Third embodiment

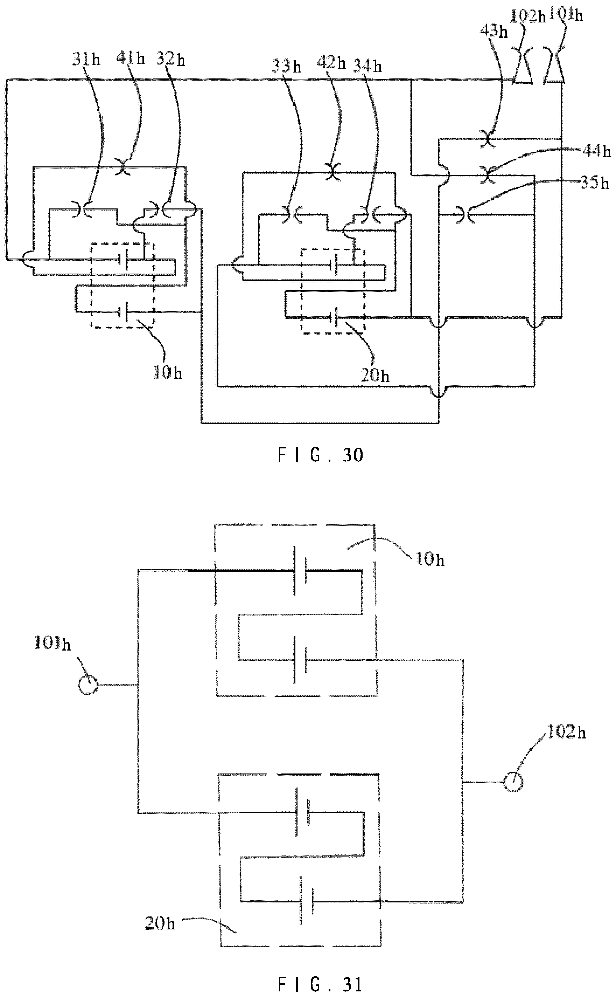

Referring to FIGs. 30 to 31, the electric energy storage device provides the third embodiment, wherein the electric energy storage device comprises four energy units with equal voltages, and the voltage of each energy unit is nV; the four energy units are equally divided into two energy modules 10h and 20h, each energy module 10h and 20h comprises two energy units, and the electric energy storage device can provide three output voltages.

The electric energy storage device is provided with a socket having two voltage output terminals correspondingly connected to a total positive electrode and a total negative electrode after being connected in parallel or in series with two energy modules 10d and 20d, respectively a positive terminal 101h and a negative terminal 102h.

The socket comprises two in-module control parts and one inter-module control part, wherein the in-module control part is used for controlling the connection state of two energy units in each energy module 10h and 20h, and the inter-module control part is used for controlling the connection state between the energy modules 10h and 20h.The in-module control part corresponding to the energy module 10h comprises two parallel switches 31h, 32h and a series switch 41h, and the in-module control part corresponding to the energy module 20h comprises two parallel switches 33h, 34h and a series switch 42h; the inter-module control part includes two parallel switches 43h, 44h and a series switch 35h. The specific connection mode of each switch is the same as that of each switch in the first embodiment, which can refer to the first embodiment.

In this embodiment, the parallel switches 31h, 32h, 33h, 34h of the in-module control part are normally open switches, the series switches 41h, 42h are normally closed switches, and initially, two energy units in the energy modules 10h, 20h are connected in series, similar to the in-module control part in the first embodiment. The parallel switches 43h and 44h of the inter-module control unit are normally closed switches and the series switch 35h is a normally open switch. Initially, the energy modules 10h and 20h are connected in parallel, similar to the inter-module control unit of the second embodiment. In this embodiment, four energy units are connected in series by two and then connected in parallel, and the corresponding connection circuit diagram is shown in FIG. 31.

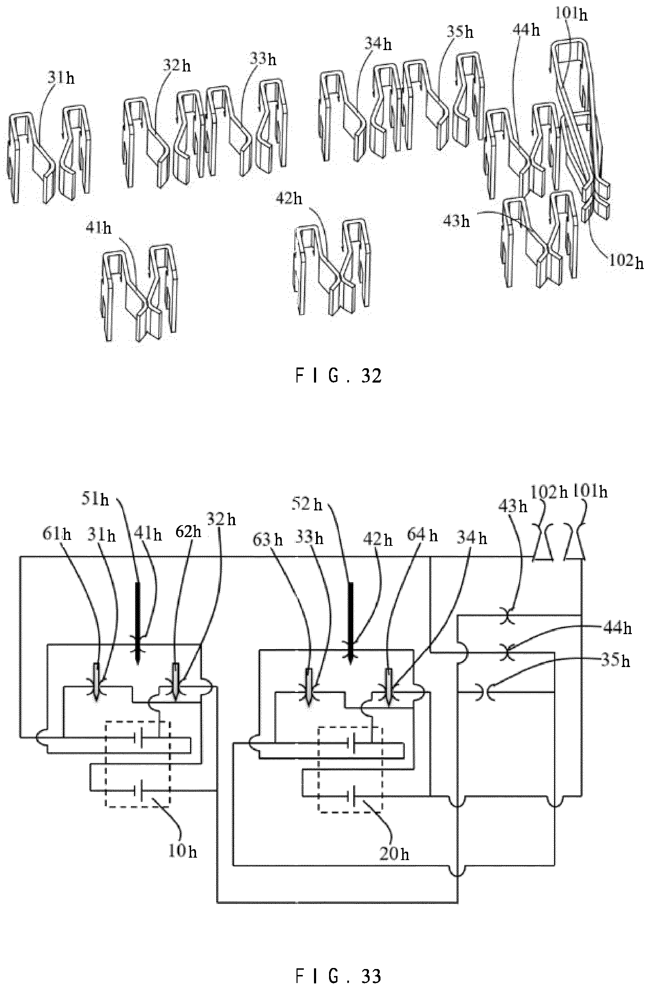

Referring to FIG. 32, the two in-module control parts and the inter-module control part are arranged in the left-right direction. Two series switches 41h and 42h of the two in-module control parts are arranged in the front row, and four parallel switches 31h, 32h, 33h, and 34h are arranged in the rear row; in the left-right direction, the series switch 41h is located between the two parallel switches 31h, 32h, and the series switch 42h is located between the two parallel switches 33h, 34h. The series switch 35h of the inter-module control part is arranged in the rear row, the parallel switch 43h is arranged in the front row, and the other parallel switch 44h and the parallel switch 43h are arranged in one row and are arranged between the front row and the rear row. In brief, the switch arrangements of the two in-modules control parts are the same as that in the first embodiment, which can refer to the first embodiment. The switch arrangements of the inter-module control part are the same as that in the second embodiment which can refer to the second embodiment.

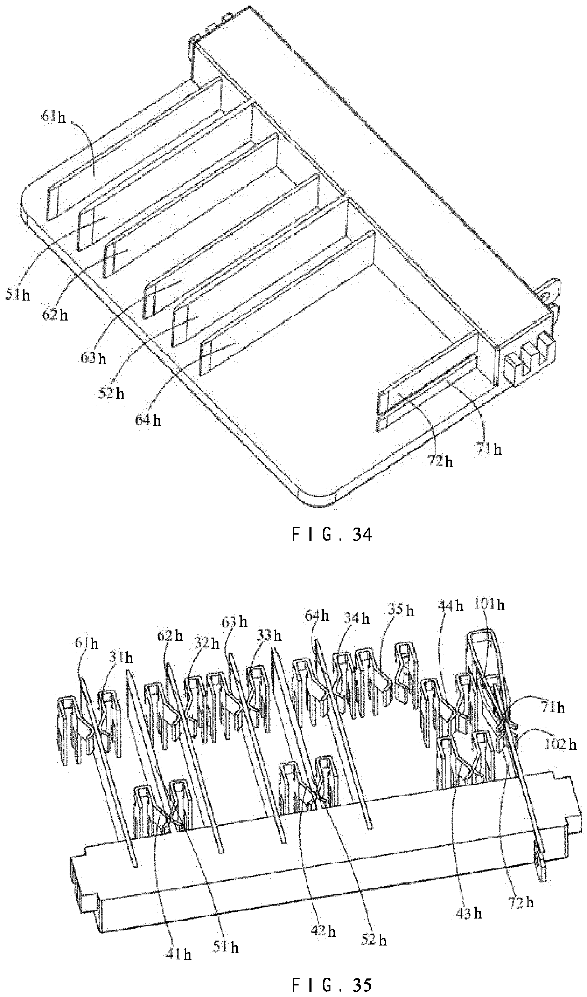

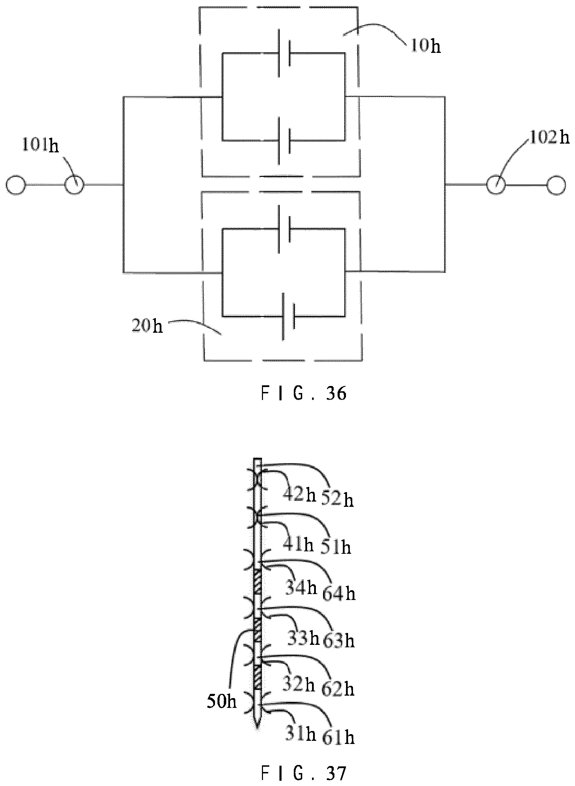

Referring to FIG. 33 in conjunction with FIG. 35, a low-voltage electric tool (not shown) operates at nV and has a low-voltage plug (not shown) that mates with a plug of the electrical energy storage device. Two connection pieces 71h, 72h are provided on the low voltage plug. The connection pieces 71h, 72h cooperate with two voltage output terminals 101h, 102h. The low-voltage plug is further provided with two internal switching parts matched with the in-module control part, the internal switching part corresponding to the energy module 10h comprises an insulating part 51h and conductive parts 61h and 62h, the internal switching part corresponding to the energy module 20h comprises an insulating part 52h and conductive parts 63h, and 64h, and the insulating parts 51h and 52h respectively disconnect the series switch 51h , 52 h, the conducting parts 61h, 62h, 63h and 64h respectively conduct the parallel switches 31h, 32h, 33h and 34h, so that the two energy units in the energy modules 10h and 20h are changed from series connection to parallel connection, and the specific matching mode of the internal switching part and the in-module control part can be referred to the first embodiment, which will not be described in detail. The two energy modules 10h, 20h are kept in parallel, and the energy storage device outputs nV to the low-voltage electric tool, and the circuit diagram is shown in FIG. 36.

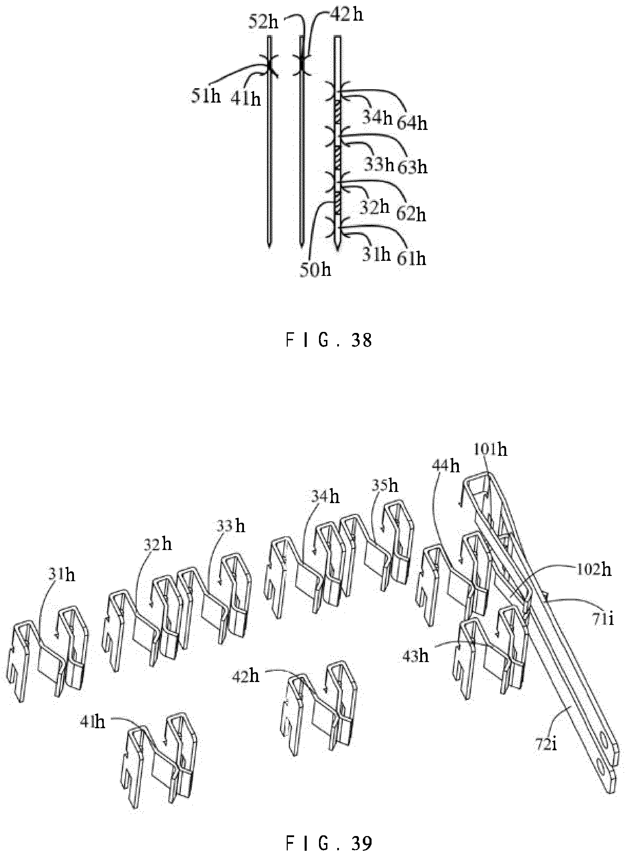

It should be noted that the arrangement of the conductive part and the insulating part can be correspondingly arranged according to the terminal arrangement of the electric energy storage device. The conductive part and the insulating part can be integrally arranged as shown in FIG.37; the conducting parts and the insulating parts can be separately arranged as shown in FIG.34; the insulating part can be partially or completely integrally arranged; the conductive parts can be provided separately or integrally, as shown in FIG.38. In summary, the arrangement of the insulating part and the conductive part can be correspondingly arranged according to the arrangement of the normally-open switch and the normally-closed switch on the electric energy storage device, and the arrangement modes can vary widely, which are not enumerated here, and those skilled in the art will appreciate that variations in the arrangement are within the scope of this disclosure.

Referring to FIG.39 in conjunction with FIG.17, a medium-voltage electric tool (not shown) operates at nV and has a low voltage plug (not shown) that mates with a plug of the electrical energy storage device. The medium-voltage plug is provided with two connection pieces 71i, 72i. The two connecting pieces 71i and 72i are respectively matched with the two voltage output terminals 101h and 102h, the two energy units in the energy modules 10h and 20h are kept in parallel, the two energy modules 10h and 20h are kept in parallel, and nV can be directly output to the low-voltage electric tool.

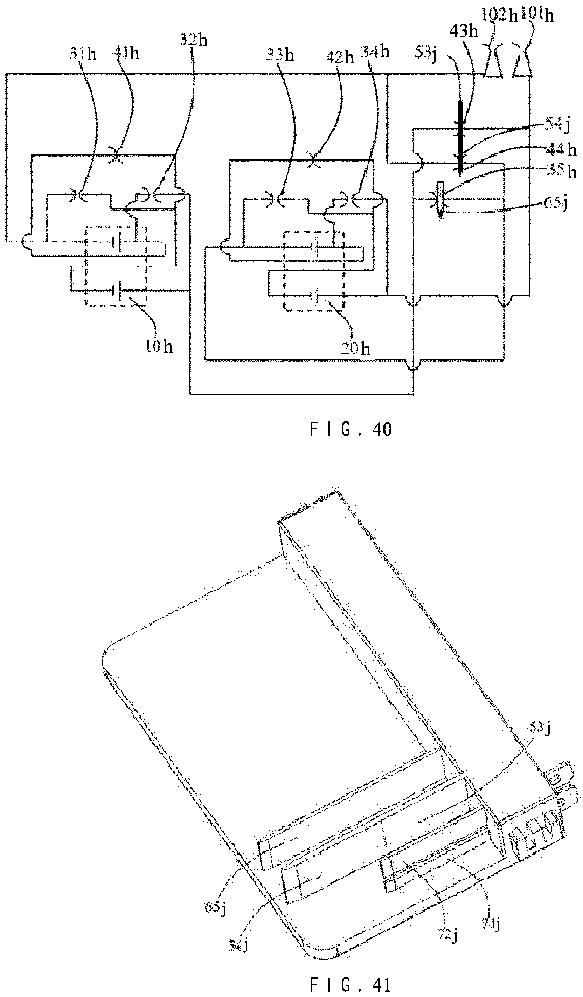

Please refer to FIG.40 to FIG.42, a high-voltage electric tool (not shown) has a working voltage of 4nV and has a high-voltage plug (not shown) that is mutually matched with the plug of the electric energy storage device.

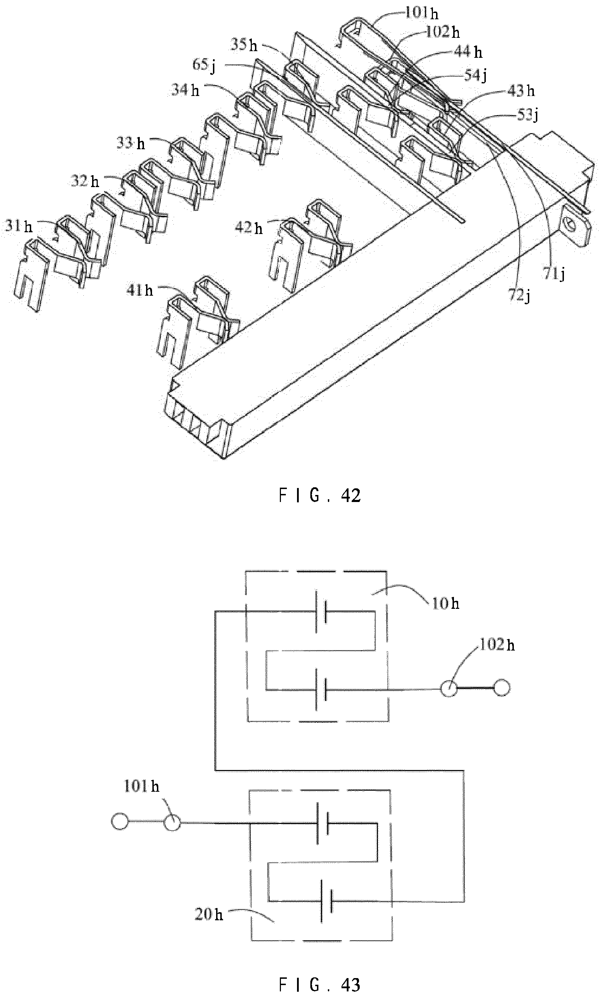

The high voltage plug is provided with two connection pieces 71j, 72j cooperating with two output terminals 101h, 102h. The high-voltage plug is provided with an external switching part matched with the inter-module control part and used for switching the connection states of the two energy units 10h and 20h in the inter-module control part. The external switching part includes a conductive part 65j and two insulating part 53j, 54j. When the high-voltage plug is plugged and matched with the socket, the external switching part is matched with the inter-module control part, the insulating parts 53j and 54j open the parallel switches 43h and 44h, the conducting part 65j conducts the series switch 35j, so that the two energy modules 10h and 20h are changed from parallel connection to series connection, and the matching of the external switching part and the inter-module control part is consistent with that in the second embodiment, which can refer to the second embodiment. The two energy units in the energy modules 10h, 20h are kept in series, so that the energy storage device outputs a high voltage of 4nV to the high-voltage electric tool, and a corresponding connection circuit diagram is shown in FIG.43.

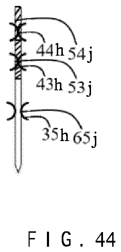

It should be noted that the conductive part 65j of the inter-module control part in this embodiment and the two insulating parts 53j, 54j can be integrally provided, as shown in FIG. 44; the conductive part 65j and the two insulating parts 53j, 54j can also be provided separately, as shown in FIG. 41. The two insulating parts 53j, 54j can be integrally provided as shown in FIG. 41; the two insulating parts 53j, 54j can also be provided separately. In summary, the arrangement of the insulating part and the conductive part can be correspondingly arranged according to the arrangement of the normally-open switch and the normally-closed switch on the electric energy storage device, and the arrangement modes can vary widely, which are not enumerated here, and those skilled in the art will appreciate that variations in the arrangement are within the scope of this disclosure.

### Fourth embodiment

The low-voltage electric tool, the medium-voltage electric tool, the high-voltage electric tool, and the electric energy storage device of any of the embodiments described above can form a broader power tool system, with the low-voltage plug of the low voltage electric tool coupled with the socket of the electric energy storage device and leaving the four energy units in full parallel; the high-voltage plug of the high-voltage electric tool is coupled with the socket and enables the four energy units to be in a full series connection state; and the medium-voltage plug of the medium-voltage electric tool is coupled with the socket and enables the four energy units to be connected in parallel after series connection in pairs or connected in series after parallel connection in pairs in a medium-voltage state.

In addition, the electric tool system includes a conventional low voltage battery pack coupled to the low voltage electric tool, a conventional medium voltage battery pack coupled to the medium voltage electric tool, or a conventional high voltage battery pack coupled to the high voltage electric tool. Each conventional low-voltage battery pack is provided with a positive electrode and a negative electrode, and can be matched with two connecting pieces of the low-voltage electric tool, the medium-voltage electric tool and the high-voltage electric tool respectively. The conventional low-voltage battery pack, the conventional medium-voltage battery pack, and the conventional high-voltage battery pack each have a fixed output voltage value.

It is to be noted that the normally-closed switch according to the first to the third embodiments is a switch of which two contact parts are in a contact state in an initial state to enable an electrode electrically connected to the two contact parts to be in a connected state, and the electrical connection state of the two contact parts can be changed by an external object action to switch the two contact parts from the contact state to an open state, for example, a normally-closed terminal. The normally-open switch is characterized in that in an initial state, two contact parts of the normally-open switch are in an open state to realize that electrodes electrically connected with the two contact parts are in the open state, and the electrical connection state of the two contact parts can be changed through the action of an external object, so that the two contact parts are switched from the open state to the connected state, for example, a normally-open terminal. Of course, normally-open switches are not limited to normally open terminals, nor are normally closed switches limited to normally closed terminals, and embodiments capable of performing the same function are within the scope of this disclosure.

## Claims

1. An electric energy storage device comprising:
four energy units with a same rated voltage, which are equally divided into two energy modules (10, 20);
a positive electrode and a negative electrode; and
a socket, wherein the socket comprises:
two voltage output terminals (101, 102) respectively connected with the positive electrode and the negative electrode; **characterized by**
an in-module control part corresponding to each of the energy modules (10, 20), wherein the in-module control part controls two of the energy units in the energy module (10, 20) to be in a parallel connection state or a series connection state and two of the energy units can be switched between the parallel connection state and the series connection state; and
an inter-module control part, wherein the inter-module control part controls the two energy modules (10, 20) to be in a parallel connection state or a series connection state and the two energy modules (10, 20) can be switched between the parallel connection state and the series connection state.

2. The electric energy storage device according to claim 1, wherein
the socket is provided with two in-module control parts, each in-module control part is provided with two parallel switches (31a, 32a; 33a, 34a) and one series switch (41a; 42a),
the two parallel switches (31a, 32a; 33a, 34a) connect two energy units in the energy module (10; 20) in parallel, the series switch (41a, 42a) connects two energy units in the energy module (10; 20) in series, and
in an initial state, one kind of the parallel switches and the series switch of the in-module control part is in a conducting state; the other kind is in an off state.

3. The electric energy storage device according to claim 2, wherein
the inter-module control part is provided with
two parallel switches (35a, 36a) which connect the two energy modules (10, 20) in parallel and
one series switch (43a) which connects the two energy modules (10, 20) in series, and
in an initial state, one kind of the parallel switches and the series switch of the inter-module control part is in a conducting state; the other kind is in an off state.

4. The electric energy storage device according to claim 3, wherein
the series switch (41a; 42a) or the parallel switches (31a, 32a; 33a, 34a) of the in-module control part each are individually arranged in one row;
the series switch (41a; 42a) of the in-module control part is arranged in one row, and the two parallel switches (31a, 32a; 33a, 34a) of the in-module control part are arranged in the other row; or
the two parallel switches (31a, 32a; 33a, 34a) and the series switch (41a, 42a) of the in-module control part are arranged in one row.

5. The electric energy storage device according to claim 3, wherein
four parallel switches (31a, 32a, 33a, 34a) of the two in-module control parts are arranged in one row; or
four parallel switches (31a, 32a, 33a, 34a) and two series switches (41a, 42a) of the two in-module control parts are arranged in the same row.

6. The electric energy storage device according to claim 3, wherein
the series switch (43a) or the parallel switches (35a, 36a) of the inter-module control part each are individually arranged in one row;
the series switch (43a) of the inter-module control part is arranged in one row, and the two parallel switches (35a, 36a) of the inter-module control part are arranged in the other row; or
the two parallel switches (35a, 36a) and the series (43a) switch of the inter-module control part are arranged in one row.

7. The electric energy storage device according to claim 3, wherein
six parallel switches (31a, 32a, 33a, 34a, 35a, 36a) and three series switches (41a, 42a, 43a) of the in-module control parts and the inter-module control part are transversely arranged into two to three rows.

8. The electric energy storage device according to claim 3, wherein
each of the parallel switches (31a, 32a, 33a, 34a, 35a, 36a) and the series switch (41a, 42a, 43a) are provided with two parts separated left and right, each part is provided with one contact arm,
wherein two of the contact arms of the parallel switch (31a, 32a, 33a, 34a, 35a, 36a) or the series switch (41a, 42a, 43a) in a conducting state are in contact with each other,
and two of the contact arms of the parallel switch (31a, 32a, 33a, 34a, 35a, 36a) or the series switch (41a, 42a, 43a) in a breaking state are separated from each other.

9. An electric tool system comprising
the electric energy storage device according to any one of claims 1 to 8 and
an electric tool, wherein the electric tool is provided with a plug which is coupled with the socket, and the plug is provided with two connection pieces (71, 72) which are respectively electrically connected with the two voltage output terminals (101, 102).

10. The electric tool system according to claim 9, wherein
an internal switching part matched with the in-module control part is arranged on the plug,
one kind of the parallel switch (31a, 32a, 33a, 34a) and the series switch (41a, 42a) of the in-module control part is a normally closed switch, the other kind is a normally open switch,
and the internal switching part comprises an insulating part (51; 52) for opening the normally closed switch and a conducting part (61) for conducting the normally open switch, so as to change two of the energy units in the energy module (10; 20) from parallel connection to series connection or from series connection to parallel connection.

11. The electric tool system according to claim 10, wherein
an external switching part matched with the inter-module control part is arranged on the plug,
one kind of the parallel (35a, 36a) switch and the series switch (43a) of the inter-module control part is a normally closed switch, the other kind is a normally open switch,
and the external switching part comprises an insulating part (53) for opening the normally closed switch and a conducting part for conducting the normally open switch, so as to change the two energy modules (10, 20) from parallel connection to series connection or from series connection to parallel connection.

12. The electric tool system according to claim 11, wherein
a plurality of the conductive parts (61, 62, 63 64a, 65, 66) are arranged in an integrated structure that are respectively contacted with a plurality of the normally open switches located in the same row, and insulating separation parts are arranged between adjacent conductive parts (61, 62, 63 64a, 65, 66); or
the conductive part (61, 62, 63 64a, 65, 66) and the insulating part are arranged into an integrated structure that are respectively contacted with the normally open switch and the normally closed switch located in the same row.

13. The electric tool system according to any one of claims 9 to 12 further comprising
and
a low-voltage electric tool, wherein the low-voltage electric tool is provided with a low-voltage plug which is coupled with the socket and enables the four energy units to be in a full parallel connection state;
a medium-voltage electric tool, wherein the medium-voltage electric tool is provided with a medium-voltage plug which is coupled with the socket and enables the four energy units to be in a medium-voltage state that every two energy units are connected in series and then connected in parallel, or every two energy units are connected in parallel and then connected in series; and
a high-voltage electric tool, wherein the high-voltage electric tool is provided with a high-voltage plug which is coupled with the socket and enables the four energy units to be in a full series connection state.

14. The electric tool system according to claim 13, further comprising
a low-voltage battery pack matched with the low-voltage electric tool,
a medium-voltage battery pack matched with the medium-voltage electric tool, or
a high-voltage battery pack matched with the high-voltage electric tool.

## Patentansprüche

1. Elektrische Energiespeichervorrichtung, umfassend:
vier Energieeinheiten mit einer gleichen Nennspannung, die gleichmäßig in zwei Energiemodule (10, 20) aufgeteilt sind;
eine positive Elektrode und eine negative Elektrode; und
eine Steckdose, wobei die Steckdose Folgendes umfasst:
zwei Spannungsausgangsklemmen (101, 102), die jeweils mit der positiven Elektrode und der negativen Elektrode verbunden sind; **gekennzeichnet durch**
ein modulintegriertes Steuerteil, das jedem der Energiemodule (10, 20) entspricht, wobei das modulintegrierte Steuerteil zwei der Energieeinheiten im Energiemodul (10, 20) so steuert, dass sie entweder in einem parallelen Verbindungszustand oder in einem seriellen Verbindungszustand sind, und zwei der Energieeinheiten zwischen dem parallelen Verbindungszustand und dem seriellen Verbindungszustand umgeschaltet werden können; und
ein modulübergreifendes Steuerteil, wobei das modulübergreifende Steuerteil die zwei Energiemodule (10, 20) so steuert, dass sie in einem parallelen Verbindungszustand oder einem seriellen Verbindungszustand sind, und die zwei Energiemodule (10, 20) zwischen dem parallelen Verbindungszustand und dem seriellen Verbindungszustand umgeschaltet werden können.

2. Elektrische Energiespeichervorrichtung nach Anspruch 1, wobei
die Steckdose mit zwei modulintegrierten Steuerteilen versehen ist, wobei jedes modulintegrierte Steuerteil mit zwei parallelen Schaltern (31a, 32a; 33a, 34a) und einem seriellen Schalter (41a; 42a) versehen ist,
die zwei parallelen Schalter (31a, 32a; 33a, 34a) zwei Energieeinheiten im Energiemodul (10; 20) parallel verbinden, der serielle Schalter (41a, 42a) zwei Energieeinheiten im Energiemodul (10; 20) in Serie verbindet, und
in einem Ausgangszustand eine Art der parallelen Schalter und der seriellen Schalter des modulintegrierten Steuerteils in einem leitenden Zustand ist; die andere Art in einem Aus-Zustand ist.

3. Elektrische Energiespeichervorrichtung nach Anspruch 2, wobei
das modulübergreifende Steuerteil versehen ist mit
zwei parallelen Schaltern (35a, 36a), die die zwei Energiemodule (10, 20) parallel verbinden und
einem seriellen Schalter (43a), der die zwei Energiemodule (10, 20) in Serie verbindet, und
in einem Ausgangszustand eine Art der parallelen Schalter und der seriellen Schalter des modulübergreifenden Steuerteils in einem leitenden Zustand ist; die andere Art in einem Aus-Zustand ist.

4. Elektrische Energiespeichervorrichtung nach Anspruch 3, wobei
der serielle Schalter (41a; 42a) oder die parallelen Schalter (31a, 32a; 33a, 34a) des modulintegrierten Steuerteils jeweils einzeln in einer Reihe angeordnet sind;
der serielle Schalter (41a; 42a) des modulintegrierten Steuerteils in einer Reihe angeordnet ist, und die zwei parallelen Schalter (31a, 32a; 33a, 34a) des modulintegrierten Steuerteils in der anderen Reihe angeordnet sind; oder
die zwei parallelen Schalter (31a, 32a; 33a, 34a) und der serielle Schalter (41a, 42a) des modulintegrierten Steuerteils in einer Reihe angeordnet sind.

5. Elektrische Energiespeichervorrichtung nach Anspruch 3, wobei
vier parallele Schalter (31a, 32a, 33a, 34a) der zwei modulintegrierten Steuerteile in einer Reihe angeordnet sind; oder
vier parallele Schalter (31a, 32a, 33a, 34a) und zwei serielle Schalter (41a, 42a) der zwei modulintegrierten Steuerteile in derselben Reihe angeordnet sind.

6. Elektrische Energiespeichervorrichtung nach Anspruch 3, wobei
der serielle Schalter (43a) oder die parallelen Schalter (35a, 36a) des modulübergreifenden Steuerteils jeweils einzeln in einer Reihe angeordnet sind;
der serielle Schalter (43a) des modulübergreifenden Steuerteils in einer Reihe angeordnet ist, und die zwei parallelen Schalter (35a, 36a) des modulübergreifenden Steuerteils in der anderen Reihe angeordnet sind; oder
die zwei parallelen Schalter (35a, 36a) und der serielle Schalter (43a) des modulübergreifenden Steuerteils in einer Reihe angeordnet sind.

7. Elektrische Energiespeichervorrichtung nach Anspruch 3, wobei
sechs parallele Schalter (31a, 32a, 33a, 34a, 35a, 36a) und drei serielle Schalter (41a, 42a, 43a) der modulintegrierten Steuerteile und des modulübergreifenden Steuerteils quer in zwei bis drei Reihen angeordnet sind.

8. Elektrische Energiespeichervorrichtung nach Anspruch 3, wobei
jeder der parallelen Schalter (31a, 32a, 33a, 34a, 35a, 36a) und der serielle Schalter (41a, 42a, 43a) mit zwei getrennten Teilen links und rechts versehen sind, wobei jedes mit einem Kontaktarm versehen ist,
wobei zwei der Kontaktarme des parallelen Schalters (31a, 32a, 33a, 34a, 35a, 36a) oder des seriellen Schalters (41a, 42a, 43a) in einem leitenden Zustand miteinander in Kontakt sind,
und zwei der Kontaktarme des parallelen Schalters (31a, 32a, 33a, 34a, 35a, 36a) oder des seriellen Schalters (41a, 42a, 43a) in einem geöffneten Zustand voneinander getrennt sind.

9. Elektrowerkzeugsystem, umfassend
die elektrische Energiespeichervorrichtung nach einem der Ansprüche 1 bis 8 und
ein Elektrowerkzeug, wobei das Elektrowerkzeug mit einem Stecker versehen ist,
der mit der Steckdose gekoppelt ist, und der Stecker mit zwei Verbindungsstücken (71, 72) versehen ist, die jeweils elektrisch mit den zwei Spannungsausgangsklemmen (101, 102) verbunden sind.

10. Elektrowerkzeugsystem nach Anspruch 9, wobei
auf dem Stecker ein internes Schaltteil angeordnet ist, das auf das modulintegrierte Steuerteil abgestimmt ist,
eine Art des parallelen Schalters (31a, 32a, 33a, 34a) und des seriellen Schalters (41a, 42a) des modulintegrierten Steuerteils ein normalerweise geschlossener Schalter ist, die andere Art ein normalerweise offener Schalter ist,
und das interne Schaltteil ein isolierendes Teil (51; 52) zum Öffnen des normalerweise geschlossenen Schalters und ein leitendes Teil (61) zum Leiten des normalerweise offenen Schalters umfasst, um zwei der Energieeinheiten im Energiemodul (10; 20) von paralleler Schaltung auf serielle Schaltung oder von serieller Schaltung auf parallele Schaltung umzuschalten.

11. Elektrowerkzeugsystem nach Anspruch 10, wobei
auf dem Stecker ein externes Schaltteil angeordnet ist, das auf das modulübergreifende Steuerteil abgestimmt ist,
eine Art des parallelen Schalters (35a, 36a) und des seriellen Schalters (43a) des modulübergreifenden Steuerteils ein normalerweise geschlossener Schalter ist, die andere Art ein normalerweise offener Schalter ist,
und das externe Schaltteil ein isolierendes Teil (53) zum Öffnen des normalerweise geschlossenen Schalters und ein leitendes Teil zum Leiten des normalerweise offenen Schalters umfasst, um die zwei Energieeinheiten im Energiemodul (10, 20) von paralleler Schaltung auf serielle Schaltung oder von serieller Schaltung auf parallele Schaltung umzuschalten.

12. Elektrowerkzeugsystem nach Anspruch 11, wobei
eine Vielzahl der leitfähigen Teile (61, 62, 63, 64a, 65, 66) in einer integrierten Struktur angeordnet ist, die jeweils mit einer Vielzahl der normalerweise offenen Schalter in Kontakt stehen, die sich in derselben Reihe befinden, und zwischen benachbarten leitfähigen Teilen (61, 62, 63, 64a, 65, 66) isolierende Trennteile angeordnet sind; oder
das leitfähige Teil (61,62, 63, 64a, 65, 66) und das isolierende Teil zu einer integrierten Struktur angeordnet sind, die jeweils mit dem normalerweise offenen Schalter und dem normalerweise geschlossenen Schalter in Kontakt stehen, die sich in derselben Reihe befinden.

13. Elektrowerkzeugsystem nach einem der Ansprüche 9 bis 12, weiter umfassend
und
ein Niederspannungs-Elektrowerkzeug, wobei das Niederspannungs-Elektrowerkzeug mit einem Niederspannungsstecker versehen ist, der mit der Steckdose gekoppelt ist und den vier Energieeinheiten ermöglicht, in einem vollständig parallelen Verbindungszustand zu sein;
ein Mittelspannungs-Elektrowerkzeug, wobei das Mittelspannungs-Elektrowerkzeug mit einem Mittelspannungsstecker versehen ist, der mit der Steckdose gekoppelt ist, und
den vier Energieeinheiten ermöglicht, in einem Mittelspannungszustand zu sein, in dem jede zweite Energieeinheit seriell und dann parallel verbunden werden, oder jede zweite Energieeinheit parallel und dann seriell verbunden werden; und
ein Hochspannungs-Elektrowerkzeug, wobei das Hochspannungs-Elektrowerkzeug mit einem Hochspannungsstecker versehen ist, der mit der Steckdose gekoppelt ist und es den vier Energieeinheiten ermöglicht, in einem vollständig seriellen Zustand zu sein.

14. Elektrowerkzeugsystem nach Anspruch 13, weiter umfassend
einen Niederspannungs-Batteriepack, der auf das Niederspannungs-Elektrowerkzeug abgestimmt ist,
einen Mittelspannungs-Batteriepack, der auf das Mittelspannungs-Elektrowerkzeug abgestimmt ist, oder
einen Hochspannungs-Batteriepack, der auf das Hochspannungs-Elektrowerkzeug abgestimmt ist.

## Revendications

1. Dispositif de stockage d'énergie électrique comprenant :
quatre unités d'énergie avec la même tension nominale, qui sont divisées de manière égale en deux modules d'énergie (10, 20) ;
une électrode positive et une électrode négative ; et
une fiche, dans laquelle la fiche comprend :
deux bornes de sortie de tension (101, 102) respectivement connectées à l'électrode positive et à l'électrode négative ; **caractérisées par**
une partie de commande interne correspondant à chacun des modules énergétiques (10, 20), dans laquelle la partie de commande interne commande deux des unités d'énergie du module énergétique (10, 20) pour qu'elles soient dans un état de connexion parallèle ou dans un état de connexion en série, et deux des unités d'énergie peuvent être commutées entre l'état de connexion parallèle et l'état de connexion en série ; et
une partie de commande inter-modules, dans laquelle la partie de commande inter-modules commande les deux modules d'énergie (10, 20) pour être dans un état de connexion parallèle ou un état de connexion en série et les deux modules d'énergie (10, 20) peuvent être commutés entre l'état de connexion parallèle et l'état de connexion en série.

2. Dispositif de stockage d'énergie électrique selon la revendication 1, dans lequel
la prise est équipée de deux modules de commande, chaque module de commande étant équipé de deux commutateurs parallèles (31a, 32a ; 33a, 34a) et d'un commutateur en série (41a ; 42a).
les deux commutateurs parallèles (31a, 32a ; 33a, 34a) connectent deux unités d'énergie du module d'énergie (10 ; 20) en parallèle, le commutateur en série (41a, 42a) connecte deux unités d'énergie du module d'énergie (10 ; 20) en série, et
dans un état initial, un type de commutateurs parallèles et le commutateur en série de la partie commande interne du module sont à l'état conducteur ; l'autre type est à l'état éteint.

3. Dispositif de stockage d'énergie électrique selon la revendication 2, dans lequel
la partie commande inter-modules est dotée de
deux commutateurs parallèles (35a, 36a) qui connectent les deux modules d'énergie (10, 20) en parallèle et
un commutateur en série (43a) qui connecte les deux modules d'énergie (10, 20) en série, et
dans un état initial, un type de commutateurs parallèles et le commutateur en série de la partie de commande inter-modules sont à l'état conducteur ; l'autre type est à l'état éteint.

4. Dispositif de stockage d'énergie électrique selon la revendication 3, dans lequel
les commutateurs en série (41a ; 42a) ou les commutateurs parallèles (31a, 32a ; 33a, 34a) de la partie commande interne du module sont chacun agencés individuellement sur une rangée ;
le commutateur en série (41a ; 42a) de la partie commande interne du module est agencée sur une rangée, et les commutateurs parallèles (31a, 32a ; 33a, 34a) de la partie commande interne du module sont agencés sur l'autre rangée ; ou
les deux commutateurs parallèles (31a, 32a ; 33a, 34a) et le commutateur en série (41a, 42a) de la partie commande interne du module sont agencées sur une seule rangée.

5. Dispositif de stockage d'énergie électrique selon la revendication 3, dans lequel
quatre commutateurs parallèles (31a, 32a, 33a, 34a) des deux parties de commande interne du module sont agencées sur une seule rangée ; ou
quatre commutateurs parallèles (31a, 32a, 33a, 34a) et deux commutateurs en série (41a, 42a) des deux parties de commande interne du module sont agencés sur la même rangée.

6. Dispositif de stockage d'énergie électrique selon la revendication 3, dans lequel
le commutateur en série (43a) ou les commutateurs parallèles (35a, 36a) de la partie de commande inter-modules sont chacun agencés individuellement sur une rangée ;
le commutateur en série (43a) de la partie commande inter-modules est agencé sur une rangée, et les deux commutateurs en parallèle (35a, 36a) de la partie commande inter-modules sont agencés sur l'autre rangée ; ou
les deux commutateurs parallèles (35a, 36a) et le commutateur série (43a) de la partie commande inter-modules sont agencés sur une seule rangée.

7. Dispositif de stockage d'énergie électrique selon la revendication 3, dans lequel
six commutateurs parallèles (31a, 32a, 33a, 34a, 35a, 36a) et trois commutateurs en série (41a, 42a, 43a) des parties de commande interne du module et de la partie de commande inter-module sont agencés transversalement sur deux ou trois rangées.

8. Dispositif de stockage d'énergie électrique selon la revendication 3, dans lequel
chacun des commutateurs parallèles (31a, 32a, 33a, 34a, 35a, 36a) et le commutateur en série (41a, 42a, 43a) est doté de deux parties séparées à gauche et à droite, chaque partie étant dotée d'un bras de contact,
dans lequel deux des bras de contact du commutateur parallèle (31a, 32a, 33a, 34a, 35a, 36a) ou du commutateur en série (41a, 42a, 43a) à l'état conducteur sont en contact l'un avec l'autre,
et deux des bras de contact du commutateur parallèle (31a, 32a, 33a, 34a, 35a, 36a) ou du commutateur en série (41a, 42a, 43a) en état de coupure sont séparés l'un de l'autre.

9. Système d'outillage électrique, comprenant :
le dispositif de stockage d'énergie électrique selon l'une quelconque des revendications 1 à 8 et
un outil électrique, dans lequel l'outil électrique est muni d'une fiche couplée à la prise, et la fiche est munie de deux pièces de connexion (71, 72) qui sont respectivement connectées électriquement aux deux bornes de sortie de tension (101, 102).

10. Système d'outillage électrique selon la revendication 9, dans lequel
un élément de commutation interne, associé à la partie de commande interne du module, est agencé sur la fiche,
un type du commutateur parallèle (31a, 32a, 33a, 34a) et le commutateur en série (41a, 42a) de la partie commande interne du module sont des commutateurs normalement fermés, l'autre type est un commutateur normalement ouvert,
et la partie de commutation interne comprend une partie isolante (51 ; 52) pour ouvrir le commutateur normalement fermé et une partie conductrice (61) pour conduire le commutateur normalement ouvert, afin de changer deux des unités d'énergie du module d'énergie (10 ; 20) de la connexion parallèle à la connexion en série ou de la connexion en série à la connexion parallèle.

11. Système d'outillage électrique selon la revendication 10, dans lequel
une partie de commutation externe, associé à la partie de commande inter-module, est agencé sur la fiche,
un type du commutateur parallèle (35a, 36a) et du commutateur en série (43a) de la partie commande interne du module sont des commutateurs normalement fermés, l'autre type est un commutateur normalement ouvert,
et la partie de commutation externe comprend une partie isolante (53) pour ouvrir le commutateur normalement fermé et une partie conductrice pour conduire le commutateur normalement ouvert, afin de changer les deux modules d'énergie (10, 20) de la connexion parallèle à la connexion en série ou de la connexion en série à la connexion parallèle.

12. Système d'outillage électrique selon la revendication 11, dans lequel
une pluralité de parties conductrices (61, 62, 63, 64a, 65, 66) sont agencées dans une structure intégrée et sont respectivement en contact avec une pluralité de commutateur normalement ouverts situés sur la même rangée ; des éléments de séparation isolants sont agencés entre les parties conductrices adjacentes (61, 62, 63, 64a, 65, 66) ; ou
la partie conductrice (61, 62, 63, 64a, 65, 66) et la partie isolante sont agencées dans une structure intégrée qui est respectivement en contact avec le commutateur normalement ouvert et le commutateur normalement fermé situés sur la même rangée.

13. Système d'outillage électrique selon l'une quelconque des revendications 9 à 12 comprenant en outre
et
un outil électrique basse tension, dans lequel l'outil électrique basse tension est muni d'une fiche basse tension qui est couplée à la prise et permet aux quatre unités d'énergie d'être dans un état de connexion parallèle complet ;
un outil électrique moyenne tension, dans lequel l'outil est muni d'une fiche moyenne tension reliée à la prise et
permet aux quatre unités énergétiques d'être dans un état de moyenne tension où chaque paire d'unités énergétiques est connectée en série puis en parallèle, ou inversement ; et
un outil électrique haute tension, dans lequel l'outil est muni d'une fiche haute tension qui se connecte à la prise et permet aux quatre unités d'énergie d'être en état de connexion en série complète.

14. Système d'outillage électrique selon la revendication 13, comprenant en outre
un bloc-batterie basse tension adapté à l'outil électrique basse tension,
un bloc-batterie moyenne tension adapté à l'outil électrique moyenne tension, ou
un bloc-batterie haute tension adapté à l'outil électrique haute tension.
